# EUROPEAN PATENT SPECIFICATION

(11) **EP 4 229 421 B1**
(45) Date of publication and mention of the grant of the patent: **29.04.2026**
(21) Application number: 21878799.2
(22) Date of filing: 15.10.2021
(51) Int. Cl.: G01N 35/02, G01N 21/65, G01N 21/25, G01N 21/64, G01N 35/04

(54) **HIGH-THROUGHPUT SCREENING APPARATUS**
HOCHDURCHSATZSCREENINGVORRICHTUNG
APPAREIL DE CRIBLAGE À HAUT RENDEMENT

(30) Priority: 15.10.2020 AU 2020903750
(43) Date of publication of application: 23.08.2023
(73) Proprietor: Avicena Systems Limited, West Perth, WA 6005 (AU)
(72) Inventor: OSTERGAARD, Paul, Cottesloe, Western Australia 6011 (AU); WATT, Paul, Mount Claremont, Western Australia 6010 (AU)
(74) Representative: IPrime Rentsch Kaelin AG
(86) International application number: PCT/AU2021/051209
(87) International publication number: WO 2022/077074

(56) References cited:
- WO-A2-2006/104616
- AU-B2- 2015 200 046
- US-A1- 2003 123 057
- US-A1- 2012 046 203
- US-A1- 2014 273 182
- US-A1- 2020 191 808
- US-A1- 2020 319 217
- US-B2- 7 270 784
- US-B2- 7 666 355
- US-B2- 8 703 492
- US-B2- 9 339 817

## Description

### FIELD OF THE INVENTION

The present invention relates to an analyser for high-throughput assay testing for the presence of a biological or biochemical substance.

The invention has been developed primarily for use in methods and systems for real-time or near-real-time systems and methods for molecular testing and analysis and screening testing for nucleotide sequences in RNA or DNA and will be described hereinafter with reference to this application. However, it will be appreciated that the invention is not limited to this particular field of use.

### BACKGROUND

Any discussion of the background art throughout the specification should in no way be considered as an admission that such background art is prior art, nor that such background art is widely known or forms part of the common general knowledge in the field in Australia or worldwide.

All references, including any patents or patent applications, cited in this specification are hereby incorporated by reference. No admission is made that any reference constitutes prior art. The discussion of the references states what their authors assert, and the applicants reserve the right to challenge the accuracy and pertinence of the cited documents. It will be clearly understood that, although a number of prior art publications are referred to herein, this reference does not constitute an admission that any of these documents forms part of the common general knowledge in the art, in Australia or in any other country.

RNA and DNA samples are commonly analysed using DNA amplification techniques such as Polymerase Chain Reaction (PCR), a technique invented in 1984 by the American biochemist Kary Mullis. A popular modern form of PCR testing is quantitative Real-Time PCR ("qRT-PCR").

Performing qRT-PCR tests has traditionally been done with large complex equipment that requires significant skill and precision to operate, due to the need to perform accurate temperature cycling of the samples being analysed. To date, qRT-PCR equipment has typically used a single microplate, either 96-well format or 384-well format as the input to the analysis process, which has limited the throughput of the testing workflow being carried out.

Additionally, the qRT-PCR process typically requires three (3) to eight (8) hours to complete a full set of temperature cycles, again providing another constraint on system testing throughput.

An alternative RNA/DNA amplification (diagnostic) technology has emerged overthe last two decades called Loop Mediated Isothermal Amplification (known as "LAMP"), invented by Eikon Corporation in 2000. LAMP requires only an isothermal (constant temperature) environment for analysing the RNA/DNA samples. The inherent simplicity of the LAMP process, i.e. isothermal conditions rather than the temperature cycling needed for PCR, allows for diagnostic infrastructure with improved throughput compared to conventional qRT-PCR testing.

The LAMP-based DNA amplification process has the following advantages, making it ideal for high-throughput applications: Firstly, the process itself can take as little as 20 to 30 minutes, which combined with time for the collection of samples, and interpretation of the results, means that an entire RNA/DNA testing process could be performed in less than one hour. Secondly using isothermal conditions means that analytical systems using LAMP can have samples arriving and leaving at any time duringthe time the analytical system is operating. There is no batch processing constraint that might unnecessarily impede throughput or wait times for LAMP analyses.

Current implementations of LAMP testing systems generally have to date not exploited the potential for scaling LAMP RNA/DNA amplification to the full extents possible. Specifically, existing LAMP testing or assay system either rely on manually operated or on cartridge-based analytical architectures that both materially constrain the throughput of the overall rate of analysis of samples.

High-throughput molecular screening tests ("molecular assays") for nucleotide sequences in RNA or DNA have traditionally used multi-sample assays on a multi-assay container, comprising a flat "SBS-format" plate with multiple "wells", each functioning as a small sample and reagent container (a "microplate" or "microtiter plate"), invented by Hungarian Dr. Gyula Takátsy in 1951. The microplate has since become a standard tool in analytical research and clinical diagnostic testing laboratories.

Research workflows to conduct large scale assays have traditionally comprised a sequence of independent machines operating in a 'chained workflow', processing assays on micro-plates in a linear, sequential fashion, one stage at a time.

A microplate allows for the parallel analysis of a large number of individual assays contained on a given microplate. However, the overall throughput of the whole workflowis still typically constrained by the slowest link in the chain, thus constraining the overall throughput of microplates through the system and the testing rate of large numbers of samples. Frequently, the bottleneck is the final or penultimate step in the chain, where a reaction is incubated and subsequently (or concurrently) analysed. For example, when conducting Polymerase Chain Reaction (PCR) analysis to amplify DNA in a laboratory to detect or screen for certain nucleotide sequences in the DNA sample, the final processing step can typically take 3-8 hours per microplate.

This bottleneck step is normally carried out by a complex and expensive machine (by way of example: any of the large 'high-throughput' PCR instruments currently available on the market, as at mid-2020), making it difficult for laboratories to scale this constrained step in the chain using parallel machines, either from a cost, technician availability or machine availability (supply) perspective.

Typically, even medium throughput molecular assay instruments include distinctstations in which the incubation steps take place and/or where for example colorimetric analysis takesplace, and for only a limited set of samples at a time. Under such configurations, micro-titre plates are normally moved robotically to these stations for such steps to take place. These constraints limit the flexibility of currently available approaches, and therefore limit opportunities for real-time reporting of outcomes at all stages of the incubation for all samples simultaneously *in situ.*

Quantitative PCR (qPCR) after reverse transcription (RT), the standard method for RNA testing, is very sensitive but requires expensive instrumentation. Loop-mediated isothermal amplification (LAMP) is an alternative to qPCR that is faster and requires fewer resources. Reverse transcription loop-mediated isothermal amplification (RT-LAMP) is a one-step nucleic acid amplification method to multiply specific sequences of RNA which may be used to diagnose infectious disease caused by RNA viruses. RT-LAMP combines LAMP DNA-detection with reverse transcription, making cDNA from RNA before running the reaction. RT-LAMP does not require thermal cycles (unlike PCR) and is performed at a constant temperature between 60° and 70°C as is common for RT-LAMP testing methodologies. The RT-LAMP technique is being supported as a cheaper and easier alternative to RT-PCR for the early diagnostics of people that are infectious for pathogens such as Zika virus, Influenza, SARS, MERS and SARS-coV-2.

There are open access LAMP test designs (including the recombinant proteins) which makes it legally possible to produce a test without significant freedom-to-operate challenges in certain jurisdictions. In contrast to classic rapid tests by lateral flow, RT-LAMP allows the early diagnosis of the disease by testing the viral RNA. The tests can be done without prior RNA-isolation, thus enabling detection of the viruses directly from swabs or from saliva. RT-LAMP is used in the detection of RNA viruses (Groups II,IV, and V on the Baltimore Virus Classification system), such as the influenza, SARS and MERS viruses and the Ebola virus and has been demonstrated as being effective in detecting individuals infected with coronavirus disease 2019 (COVID-19) caused by the SARS-CoV-2 (severe acute respiratory syndrome coronavirus 2) coronavirus [see, for example, Viet Loan Dao Thi et al, Science Translational Medicine 12 Aug 2020: Vol. 12, Issue 556, eabc7075; DOI: 10.1126/scitrans/med.abc7075].

Also, and more significantly, most if not all, current colorimetric LAMP protocols (including RT-LAMP) have a key shortcoming that most or all negative samples eventually turn positive, given enough LAMP reaction time. Thus, the key signal-to-noise ratio of RT-LAMP ultimately limits the sensitivity and specificity of the LAMP assay.

Those skilled in the art will be aware that the instrumentation disclosed herein is applicable to a range of nucleic acid amplification technologies, including but not limited to those described here by Fakruddin, MD et al. "Nucleic acid amplification: Alternative methods of polymerase chain reaction" Journal of pharmacy and bioallied sciences, Vol. 5,4 (2013): 245-52. doi:10.4103/0975-7406.120066.

For example, the methods disclosed herein can be applied to a range of other rapid isothermal nucleic acid detection methods in addition to classical LAMP, including variants of LAMP itself such as RAMP, QUASR-LAMP, DARQ-LAMP, MD-LAMP (Becherer et al (2018) Anal. Chem, 90, 4741-4748 and other isothermal amplification methods, including:
▪ *Rolling Circle Amplification (RCA)* NASBA-Nucleic acid sequence-based amplification is a method used to amplify RNA;
▪ HAD-Helicase-dependent amplification which uses the double-stranded DNA unwinding activity of a helicase to separate strandsfor in vitro DNA amplification at constant temperature;
▪ RCA-Rolling circle amplification starts from a circular DNA template anda short DNA or RNA primer to form along single stranded molecule;
▪ RTF-EXPAR
▪ *LAMP CRISPR* or
▪ MDA-Multiple displacement amplification is a technique that initiates when multiple random primers anneal to the DNA template and the polymerase amplifies DNA at constant temperature.

Those skilled in the art will be aware that the instrumentation disclosed herein can equally be applied to technologies which combine next generation sequencing and LAMP technology, including but not limited to, LAMPseq [see Schmid-Burgk, J. L. et al. LAMPSeq: Population-Scale COVID-19 Diagnostics Using a Compressed BarcodeSpace. Biorxiv 2020.04.06.025635 (2020) doi:10.1101/2020.04.06.025635] or LamPORE.

Therefore, there is a need for significant improvements in high-throughput testing apparatus for real-time, or near-real-time testing and analysis of large numbers of molecular/DNA/RNA samples, for fast, accurate and comprehensive testing of a population, particularly during a pandemic such as the coronavirus COVID-19 pandemic of 2020.

There is also a need for improvements in testing equipment such as an integratedsample preparation and inactivation capability, capacity for continuous monitoring of signal emergence over time and an apparatus which is capable of running continuously with new samples added and completed samples removed in a steady state workflow. The capacity to allow for removal or addition of sample plates while the instrument is running would also make such an instrument much more flexible, since it would allow forretesting of samples or validated of putative positive samples using complementary screening technology.

US 2020/0191808 A1 describes a device that incubates and analyses a single multi-well plate.

US 2020/0319217 A1 describes a device that can incubate several multi-well plates at the same time, by imaging two adjacent wells within one multi-well plate at the same time.

US 2014/0273182 A1 describes a device that has an incubation zone that can accommodate and image/analyze a single microtiter plate.

### SUMMARY

To overcome the throughput constraints of currently available systems and approach real-time, or near-real-time sample analysis, mechanisms and methods can be deployed. The systems and methods described herein significantly and cost-effectively improve the throughput of end-to-end molecular assay systems and molecular analysis workflows by more than one, up to at least two, orders of magnitude allowing for thousands of assays to be conducted per hour and hundreds of thousands of assays to be completed per day per machine. Crucially, the apparatus configurations disclosed herein uniquely allow for the creation of steady-state, or quasi-steady state workflows, which can be fed at random intervals, continuously or semi-continuously, with new microtitre plates (e.g. 96 well or 384 well). Temporary or permanent removal of individual plates from the system while it is running is also possible with minimal disruption to the workflow as described below.

Adaptation of the system described herein for LAMPseq protocols only requires that barcoded primers (individually or in pools) are incorporated into amplicons during the LAMP reaction, so that the reaction products exiting the system already contain templates for subsequent next generation sequencing. Skilled artisans are aware that such applications can (but need not) incorporate an initial colorimetric or fluorometric assay as described herein, to limit the number (and cost) of the subsequent sequencing step.

The invention is set out in the appended set of claims.

In one specific embodiment each analysis vessel is a microplate assay.

The imaging system may be arranged to record images comprising colorimetric or fluorescent signals arising from the illuminated samples in the analysis vessels located within the incubation field.

In one embodiment the imaging system is a scanning imaging system comprising components that move during scanning and wherein the controller is adapted to coordinate a motion of the analysis vessel transfer system operation when transferring analysis vessels to and from the incubation field with the motion of the scanning imaging system to avoid collisions between the analysis vessel transfer system and the imaging system and to minimize waiting times for new analysis vessels to access empty slots in the incubation field.

The analyser may be configured to accept analysis vessels with fresh samples whilst in operation to permit continuous analysis operations.

Incubation of samples in wells of the analysis vessels may be performed simultaneously with the optical imaging and analysing of the samples for the presence of the biological or biochemical substance.

The analyser may be operable as a queueing system to maximise the utilization of the resources within the analyser for processing the analysis vessels with their samples within the analyser. Further, the controller may be arranged to operate in accordance with a predictive method for coordinating the movement of multiple robotic entities to avoid collisions between the robotic entities or to minimize the queuing times to access scarce resources (such as available incubation slots). The predictive method may coordinate the movement of multiple robotic entities operating in a shared time and space environment ("Coordination function"), to avoid collisions between subsystems, whilst maximising analyser throughput and minimising overall analysis vessel processing delay through the analyser. The predictive method may be one of the following:
▪ a method implementing an algorithm to simultaneously predict a future position of a plurality of robotically controlled entities, all operating dynamically in the same 3-D space continuum;
▪ a method as described above that further calculates an ensemble ("Ex Ante Ensemble") of future 3-D trajectories associated with said plurality of robotically controlled entities;
▪ a method as described above that uses the state of other entities to determine the timing of future planned 3-D trajectories;
▪ a method as described above that uses the timings above to create a 4-D space-time ensemble of potential future collisions;
▪ a method as described above that uses the ensemble of potential future collisions to calculate an optimal alternative ensemble of future 3-D trajectories, associated with said plurality of robotically controlled entities, wherein all projected collisions are eliminated (*"Ex Post* Ensemble");
▪ a method as described above that replaces the *Ex Ante* Ensemble with the *Ex Post* Ensemble of scheduled future 3-D trajectories to prevent future collisions.

The analysis vessel transfer system may be a microplate crane system. Further, the resource controller may be adapted to process the image information using an image processor to determine a positive determination of the biological or biochemical substance under test.

The controller may be arranged to control the imaging system to optically scan the analysis vessels retained in the incubation field according to a predetermined incubation period and scan frequency. The analyser may comprise a sample carrier tray for receiving a plurality of analysis vessels. The incubation station may be adapted to provide uniform back or side-illumination. Each analysis vessel may be processed according to a unique analysis process schedule, for assay testing for the presence of different biological or biochemical substances in each microplate assay.

The analyser may comprise a plurality of optical fibre bundles, each optical fibre bundle being associated with a respective microplate slot of the incubation field. Each optical fibre bundle may comprise a plurality of optical fibre sub-bundles, each sub-bundle may comprise a plurality of optical fibres, each optical fibre being directed to a location coinciding with an aperture of an analysis vessel carrier and adapted to provide back or side illumination to a respective sample well of a analysis vessel retained in the analysis vessel carrier.

The imaging system may be a scanning imaging system comprising at least one optical camera adapted for imaging of analysis vessels located in the incubation field. The imaging system may be adapted to image the complete area of the incubation field at a rate of at least once per minute.

The imaging system may also be adapted to scan the incubation field in a 2-dimensional scan path.

Further, the imaging system may comprise a plurality of imaging cameras adapted to provide a combined field of view across the full width of the incubation field, and wherein the imaging system is adapted to scan the incubation field in a 1-dimensional scan path.

Alternatively, the imaging system may comprise a plurality of fixed optical imaging cameras located above the incubation field for imaging of samples in analysis vessels located in the incubation field.

The present invention provides in a second aspect an analyser system comprising a plurality of the analysers of the first aspect of the present invention, wherein the analysers are arranged for simultaneous operation and wherein the resource controller of each analyser is arranged to control the analysis vessel transfer system such that analysis vessels are transferred to processing stations within one analyser or between analysers, depending on the utilization rates, to optimize the efficiency of the analyser system and minimize queue times.

The present disclosure also provides an automated analyser for high-throughput assay testing for the presence of a biological or biochemical substance comprising;
a sample carrier tray for receiving a plurality of samples arranged in formats compatible for microplate assays;
a sample preparation station comprising a liquid handling means adapted to transfer aliquots of samples to individual wells of a microplate assay and (where the plates have not been pre-filled) to transfer apredetermined quantity of LAMP reagent to each individual well of the microplate assay;an optional sample queueing station adapted to receive prepared microplate assays from
   the sample preparation station.
an optional microplate sealing station adapted to receive microplate assays from the queueing station and seal the sample-containing wells of the microplate assay; an incubation station comprising:
   an incubation field comprising a regular array of a plurality of microplate slots adapted to receive microplate assays;
   an incubation controller adapted to maintain the incubation field at a predetermined temperature for activation of enzymes in the sample wells of the microplates;
   a light source located beneath the incubation field adapted to provide uniform back-illumination to each individual sample well of microplates located inmicroplate slots of the incubation field
   a temperature regulation means which may be located beneath the incubation field;
      and
   an imaging system adapted to image the back illuminated or side illuminated sample wells of microplates located in microplate slots of the incubation field;
   a microplate disposal station adapted to receive used microplates from the incubation field for disposal of the samples in the wells of the used microplates;
   a microplate crane system adapted to transfer microplate assays between the sample preparation station, sample queueing station, (optional) microplate sealing station, incubation station, and microplate disposal station in accordance with a predetermined analysis process schedule;
      a resource controller adapted to:
      control the microplate crane system to transfer the plurality of microplate assays to respective stations for preparation and analysis of the biological or biochemicalsubstance in accordance with the predetermined analysis process schedule;
      control the imaging system to optically scan the microplates located in the incubation field according to a predetermined incubation period and scan frequency;
      receive optical image information from the imaging system of the scanned microplates;
      process the image information using an image processor to generate an optimised image of each back-illuminated sample well in each microplate in the incubation field;
      analyse the aggregated microplate images accumulated across the incubation time to determine a positive determination of the biological or biochemical substance under test.

The sample carrier tray may be in a compatible format for transferring samples to a plurality of microplate assays.

The microplate carrier may comprise a plurality of apertures adapted to receive individual sample wells of a microplate. Each of the plurality of apertures may extend through the full thickness of the microplate carrier to permit back illumination of sample wells located in the apertures.

The temperature regulation means of the incubation station may comprise a fluid bath located beneath the incubation field. Preferably the fluid in the bath is oil based or water based, but for the purposes of this disclosure shall be referred to herein as a 'water bath' regardless of the fluid used. The temperature of the water bath may be controlled by the incubation controller to maintain samples in wells of microplates in the slots of the incubation field at a predetermined incubation temperature. In variations of the described embodiment, the temperature regulation means of the incubation station may comprise a solid-state heater or an air heater.

The light source may comprise a light panel adapted to provide uniform lighting to the incubation field. The uniform lighting may be uniform back, top or side illumination.

The light source may alternately comprise a plurality of optical fibre bundles, each optical fibre bundle being associated with a respective microplate slot of the incubation field. Each optical fibre bundle may comprise a plurality of optical fibre sub-bundles, each sub-bundle comprising a plurality of optical fibres. Each optical fibre may be directed to a location coinciding with an aperture of a microplate carrier and adapted to provide illumination from underneath or from the side to a respective sample well of a microplate retained in the microplate carrier.

In such an embodiment the wavelength of light directed to individual wells in the microplate carrier can be changed or restricted, by means of changing filters, diffraction gratings, prisms, or specific light sources at the other end of the fibre, for example to allow for excitation of particular fluorophores in the reaction. In a variation of the described embodiment a change in wavelength may also be achieved using an illumination panel whereby LEDs of different wavelengths are fitted and selectively controlled to realise desired colours of illumination light.

The imaging system may comprise a scanning imaging system comprising at least one or a plurality of optical cameras, photomultiplier tubes or photodiodes adapted for imaging of microplates located in the incubation field. The imaging system may be adapted to scan the incubation field inaccordance with a predetermined schedule. The imaging system may be adapted to obtain optical imaging of the complete area of the incubation field at a rate of at least onceper minute. The imaging system may be adapted to scan the incubation field in a 2-dimensional scan path.

The imaging system may alternately comprise a plurality of imaging cameras or adapted to provide a combined field of view across the full width of the incubation field, and wherein the imaging system is adapted to scan the incubation field in a 1-dimensional scan path.

The imaging system may alternately comprise a plurality of fixed optical imaging cameras and/or photodiodes or photomultipliers located above the incubation field for imaging of microplates located in the incubation field.

The imaging system may be adapted to record images comprising colorimetric of fluorescent optical signals arising from the back-lit, side-lit or top-lit samples in the plurality of wellsin the microplates located within the incubation field.

The resource controller may be adapted to coordinate the motion of the microplate crane operation when transferring microplates to and from the incubation field with the motion of the scanning imaging system to avoid collisions to minimize waiting times for access to scarce resources such as incubations slots or to optimize imaging workflow between the microplatecrane and the imaging system.

The analyser may be configured to accept fresh microplate samples whilst in operation to permit continuous analysis operations.

The analysis of the aggregate microplates images comprises associating the time for a sample to indicate apositive indication of the presence of the biological or biochemical substance to determine an indication of the concentration of the biological or biochemical substance present in the sample.

Incubation of samples in wells of the microplates may be performed simultaneously with the optical imaging and analysing of the samples for the presence of the biological or biochemical substance.

Each microplate may be processed according to a unique analysis process schedule, for assay testing for the presence of different biological or biochemical substances in each microplate assay.

The present disclosure further provides a method for providing a high-throughput assay testing for the presence of a biological or biochemical substance comprising;
providing a sample carrier tray which is in a compatible format for transferring to a plurality of microplate assays;
providing a microplate crane system adapted to transfer microplate assays between sample preparation and analysis stations of the analyser according to a predetermined analysis process schedule;
using the microplate crane, transferring received microplate assays to a sample preparation station comprising a liquid handling means and transferring aliquots of samples to individual wells of a microplate assay and transferring a predetermined quantity of LAMP reagent to each individual well of the microplate assay;
   using the microplate crane, transferring the prepared microplate assay to a sample queueing station;
using the microplate crane, transferring the queued microplate assay to a microplate sealing station and sealing the sample-containing wells of the microplate assay;
providing an incubation station comprising:
   an incubation field comprising a regular array of a plurality of microplate slots adapted to receive microplate assays which may be sealed;
   an incubation controller adapted to maintain the incubation field at a predetermined temperature for activation of enzymes in the sample wells of the microplates;
   a direct light source which may be located beneath or adjacent to the incubation field or an indirect light source directed via on optical fibre, and is adapted to provide uniform back-illumination or side-illumination of each individual sample well of microplates located in microplate slots of the incubation field;
   a temperature regulation means located beneath the incubation field; and providing an imaging system adapted to image the back illuminated or
   side-illuminated sample wells of microplates located in microplate slots of the incubation field;
      receiving images of back illuminated samples in the incubation field;
      processing the received images to determine colorimetric and/or fluorescence image data indicative of the presence of the biological or biochemical substance in one or more microplate sample wells;
      using the plate crane, transferring analysed microplates to a microplate disposal station for disposal of the samples in the wells of the used microplates;
      providing a resource controller adapted to:
         control the microplate crane system to transfer the plurality of microplate assays to respective stations for preparation and analysis of the biological or biochemical substance in accordance with the predetermined analysis process schedule;
         control the imaging system to optically scan the microplates located in the incubation field according to a predetermined incubation period and scan frequency;
         receive optical image information from the imaging system of the scanned microplates;
         process the image information using an image processor to generate an aggregated or optimised image of each back-illuminated or side-illuminated sample well in each microplate in the incubation field; and
         analyse the aggregated microplate images to determine a positive determination of the biological or biochemical substance under test.

In addition, the present disclosure provides an automated analyser for high-throughput assay testing for the presence of a biological or biochemical substance comprising;
a sample carrier tray in a format for transferring samples to a plurality of microplate assays each assay comprising a plurality of samples retained in a unique well of the microplate assay;
a plurality of sample process stations adapted to receive a microplate assay and perform one or more processing or analysis steps on the samples retained in the microplate assay;
said process stations comprising at least an incubation station adapted to:
   receive a plurality of microplate assays;
   provide uniform back illumination or side illumination to each sample well of each microplate assay in the incubation field; and
   maintain the plurality of microplate assays at a predetermined incubation temperature or range of temperatures;
   wherein the analyser further comprises:
      a microplate crane system adapted to transfer microplate assays between each of the process stations;
      an imaging system adapted to image the back illuminated or side illuminated sample wells of microplates retained in the incubation field; and
      a resource controller adapted to:
         control the microplate crane system to transfer the plurality of microplate assays to respective process stations for preparation and analysis of the biological or biochemical substance in accordance with a predetermined analysis process schedule;
         control the imaging system to optically scan the microplates retained in the incubation field according to a predetermined incubation period and scan frequency;
         receive optical image information from the imaging system of the scanned microplates;
         process the image information using an image processor to determine a positive determination of the biological or biochemical substance under test.

The resource controller may be further adapted to direct plates containing putative positive samples for subsequent analysis such as fluorescent annealing kinetics to determine duplex melting curves or (in the case of LAMPseq, next generation sequencing.

The resource controller may be further adapted to direct plates at different stages of the analysis to incubation stations operating at distinct temperatures, corresponding to different stages of the biological assay.

### BRIEF DESCRIPTION OF THE DRAWINGS

Notwithstanding any other forms which may fall within the scope of the present invention, a preferred embodiment / preferred embodiments of the invention will now be described, by way of example only, with reference to the accompanying drawings in which:
Figure 1 is a flow chart of a method using an automated analyser 10 for high-throughput assay testing for the presence of a biological or biochemical substance in accordance with an embodiment of the present invention;
Figure 2A is a perspective view of the automated analyser 10 for high-throughput assay testing for the presence of a biological or biochemical substance in accordance with an embodiment of the present invention;
Figure 2B is a top view of the automated analyser 10 for high-throughput assay testing for the presence of a biological or biochemical substance in accordance with an embodiment of the present invention;
Figure 3 is a perspective view of an automated analyser 100 for high-throughput assay testing for the presence of a biological or biochemical substance in accordance with a further embodiment of the present invention;
Figure 4 is a side view of the automated analyser shown in Figure 3;
Figure 5 shows perspective ghost view and side cut-away view of a block for receiving a microplate array of samples for testing used in the analyser shown in Figures 2-4;
Figure 6 shows components used in the analyser 100 shown in Figures 2-4;
Figures 7A and 7B illustrate back-illumination samples using the analyser shown in Figures 2-4;
Figure 8 illustrates back-illumination of samples using a variation of the analyser shown in Figures 2-4;
Figure 9 illustrates linear strip image analysis of individual microplate wells being imaged by multiple cameras, linearly segmented into strips and re-assembled into a full microplate image using an analyser in accordance with an embodiment of the present invention; and

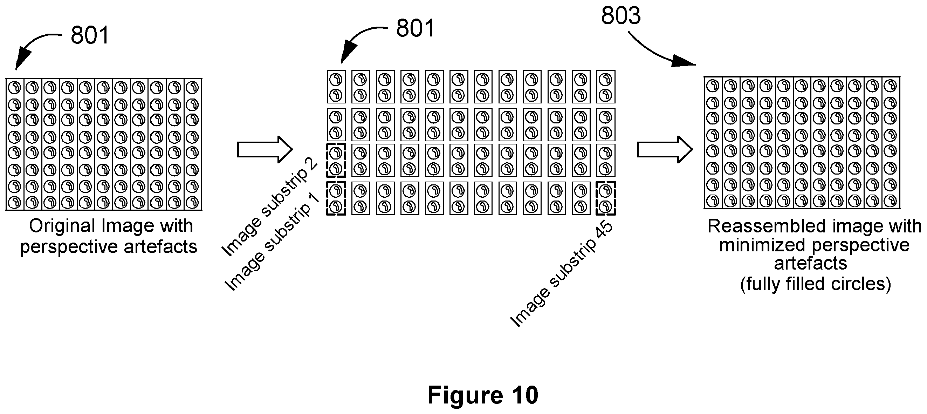

Figure 10 is a representation of a matrix segmented image analysis of individual microplate wells being imaged by multiple cameras, divided into smaller segments, according to a grid layout, and re-assembled into a full microplate image using an analyser in accordance with an embodiment of the present invention.

### DEFINITIONS

The following definitions are provided as general definitions and should in no way limit the scope of the present invention to those terms alone, but are put forth for a better understanding of the following description.

Unless defined otherwise, all technical and scientific terminology used herein have the same meaning as commonly understood by those of ordinary skill in the art to which the invention belongs. It will be further understood that terms used herein should be interpreted as having a meaning that is consistent with their meaning in the context of this specification and the relevant art and will not be interpreted in an idealized or overly formal sense unless expressly so defined herein. For the purposes of the present invention, additional terms are defined below. Furthermore, all definitions, as defined and used herein, should be understood to control over dictionary definitions, definitions in documents incorporated by reference, and/or ordinary meanings of the defined terms unless there is doubt as to the meaning of a particular term, in which case the common dictionary definition and/or common usage of the term will prevail.

For the purposes of the present invention, the following terms are defined below.

The articles "*a*" and "*an*" are used herein to refer to one or to more than one (i.e. to at least one) of the grammatical object of the article. By way of example, *"an element"* refers to one element or more than one element.

The term *"about"* is used herein to refer to quantities that vary by as much as 30%, preferably by as much as 20%, and more preferably by as much as 10% to a reference quantity. The use of the word 'about' to qualify a number is merely an expressindication that the number is not to be construed as a precise value.

Throughout this specification, unless the context requires otherwise, the words *"comprise", "comprises"* and *"comprising"* will be understood to imply the inclusion of a stated step or element or group of steps or elements but not the exclusion of any other step or element or group of steps or elements.

Any one of the terms *"including"* or *"which includes"* or *"that includes"* as used herein is also an open term that also means including at least the elements/features thatfollow the term, but not excluding others. Thus, *"including"* is synonymous with and means *"comprising".*

In the claims, as well as in the summary above and the description below, all transitional phrases such as *"comprising", "including", "carrying", "having", "containing", "involving", "holding", "composed of",* and the like are to be understood to be open-ended, i.e. to mean *"including but not limited to".* Only the transitional phrases *"consisting of"* and *"consisting essentially of*" alone shall be closed or semi-closed transitional phrases, respectively.

Although any methods and materials similar or equivalent to those described herein can be used in the practice or testing of the present invention, preferred methodsand materials are described. It will be appreciated that the methods, apparatus and systems described herein may be implemented in a variety of ways and for a variety of purposes. The description here is by way of example only.

The term, "real-time", for example "displaying real-time data", refers to the displayof the data without intentional delay, given the processing limitations of the system and the time required to accurately measure the data. Similarly, a process occurring "in realtime" refers to operation of the process without intentional delay or in which some kind of operation occurs simultaneously (or nearly simultaneously) with when it is happening.

The term, "near-real-time", for example "obtaining real-time or near-real-time data" refers to the obtaining of data either without intentional delay ("real-time") or as close to real-time as practically possible (i.e. with a small, but minimal, amount of delay whether intentional or not within the constraints and processing limitations of the of the system for obtaining and recording or transmitting the data.

The term, 'open steady state' process, refers to a situation where all points in an apparatus remain constant as time changes, through balanced output and input to the system. Such a system avoids accumulation of material over the time period of interest within the system, allowing a constant mass flow rate in the flow path through each element of the system.

Although any methods and materials similar or equivalent to those described herein can be used in the practice or testing of the present invention, preferred methodsand materials are described. It will be appreciated that the methods, apparatus and systems described herein may be implemented in a variety of ways and for a variety of purposes. The description here is by way of example only.

As used herein, the term "exemplary" is used in the sense of providing examples,as opposed to indicating quality. That is, an "exemplary embodiment" is an embodiment provided as an example, as opposed to necessarily being an embodiment of exemplary quality for example serving as a desirable model or representing the best of its kind.

Also, various inventive concepts may be embodied as one or more methods, of which an example has been provided. The acts performed as part of the method may beordered in any suitable way. Accordingly, embodiments may be constructed in which acts are performed in an order different than illustrated, which may include performing some acts simultaneously, even though shown as sequential acts in illustrative embodiments.

The phrase "and/or", as used herein in the specification and in the claims, shouldbe understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separatingitems in a list, "or" or "and/or" shall be interpreted as being inclusive, i.e., the inclusion ofat least one, but also including more than one, of a number or list of elements, and, optionally, additional unlisted items. Only terms clearly indicated to the contrary, such as"only one of" or "exactly one of", or, when used in the claims, "consisting of" will refer to the inclusion of exactly one element of a number or list of elements. In general, the term"or" as used herein shall only be interpreted as indicating exclusive alternatives (i.e. "oneor the other but not both") when preceded by terms of exclusivity, such as "either", "one of', "only one of", or "exactly one of'. "Consisting essentially of", when used in the claims,shall have its ordinary meaning as used in the field of patent law.

As used herein in the specification and in the claims, the phrase "at least one", in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B", or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

For the purpose of this specification, where method steps are described in sequence, the sequence does not necessarily mean that the steps are to be carried out in chronological order in that sequence, unless there is no other logical manner of interpreting the sequence.

In addition, where features or aspects of the invention are described in terms of Markush groups, those skilled in the art will recognise that the invention is also thereby described in terms of any individual member or subgroup of members of the Markush group.

### DETAILED DESCRIPTION

It should be noted in the following description that like or the same reference numerals in different embodiments denote the same or similar features.

High throughput testing apparatus in accordance with some embodiment of the present invention applies robotic handling, control systems, traffic flow management techniques for resource management,familiar to those skilled in the arts of engineering managing and dimensioning telecommunications networks, to the problem of efficiently managing and scheduling a plurality of analysis vessels, microplate assay vessels, analytical and reaction stations (each herein termed an 'IncubationSlot') contained within a single machine or a set of associated machines tasked with processing as many microplate assays as possible within a given period of time.

The apparatus and methods described herein primarily improve molecular screening or testing throughput. The headway distribution resulting from the management and scheduling of the transfer of analysis vessels between processing stations may in some examples be approximated using known headway distributions, such as Miller's travelling queue model, Borel-Tanner and the Erlang headway distribution. Some embodiments of the present invention manage and schedule the transfer of analysis vessels between processing stations using techniques based on to those known for road traffic management. For details of relevant traffic management techniques and headway distributions reference is being made to chapter 2, chapter 4.3 and table 3.1 of "Guide to Traffic Management Part 2" published by Australroads Ltd in 2015.

Other traffic engineering solutions are know from telecommunication and data network management for example those described in Al Ajarmeh's thesis entitled Stochastic Modeling and Time-to-event Analysis of VoIP Traffic (2013). In this reference which is incorporated by reference the advantages and disadvantages of various modeling approaches for telecommunication applications are described in Table 5 on page 79, these models include Poisson, Non-homogenous Poisson, Erlang jk, BCMP, Packet level arrival, lognormal, Phase-type distribution, Pareto distribution, Weibull and piecewise Weibull distributions.

In one example 'trunking' principles are applied and will be described in further details below, but a person skilled in the art will appreciate that in alternative embodiments other traffic management optimization approaches may be used.

The "trunking" principle was developed by the Danish statistician A.K. Erlang in the 1920s, to improve the throughput of resource-constrained molecular assay sub-systems. Trunking may be used in a system described herein to manage the efficient utilisation of a plurality of Incubation Slots by placing such resources under the control of a single resource scheduling and monitoring entity which is tasked with managing such resources as a multi-channel system, efficiently scheduling the arrival and departure of microplates being analysed to selected Incubation Slots. In doing so, the potential for human error or time wastage is significantly reduced, while the utilisation (or occupancy) of an Incubation Slot in a busy system is maximised close to its theoretical maximum of 1.0 Erlang, thereby maximising the overallflow of microplates through the system, independently of the actual probability distributionof new microplates arriving into the system.

This system and methods described herein relax the constraint of using 'single station chained workflows' referenced above to provide a significant and cost-effective boost to system throughput for a high-throughput molecular analysis workflow.

The system and methods described here can equally be applied to a plurality of high throughput sample processing and testing apparatus. For example, where two systems are operating simultaneously, sample loading trays might be directed to one rather than the other, depending on the utilization rates, by a control system to optimize the efficiency and minimize queue times.

The systems and methods described herein resolve the issues described above while also providing several other benefits.

The following will provide an overview of the operation of the analyser and sample processors for high-throughput assay testing in accordance with an embodiment of the present invention. The overview is provided in the context of a method of scanning saliva samples for the presence of a virus.

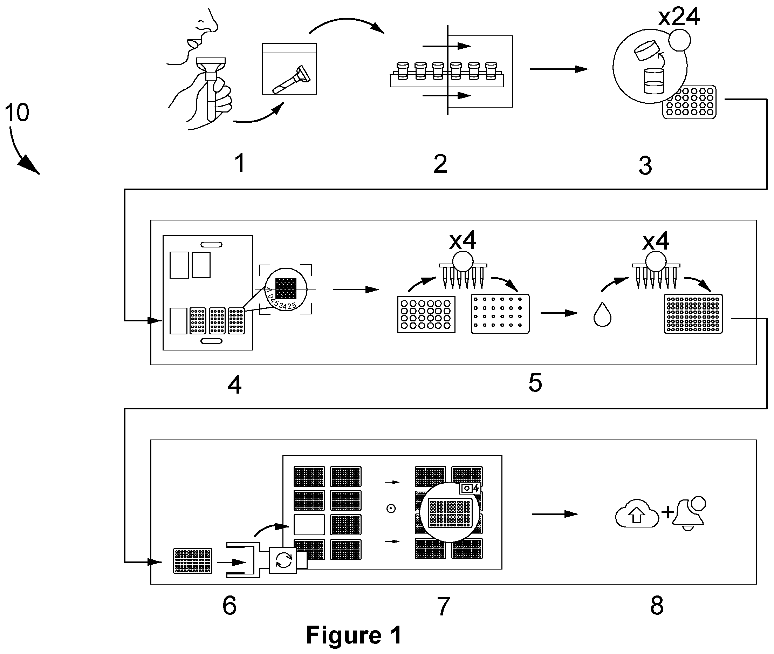

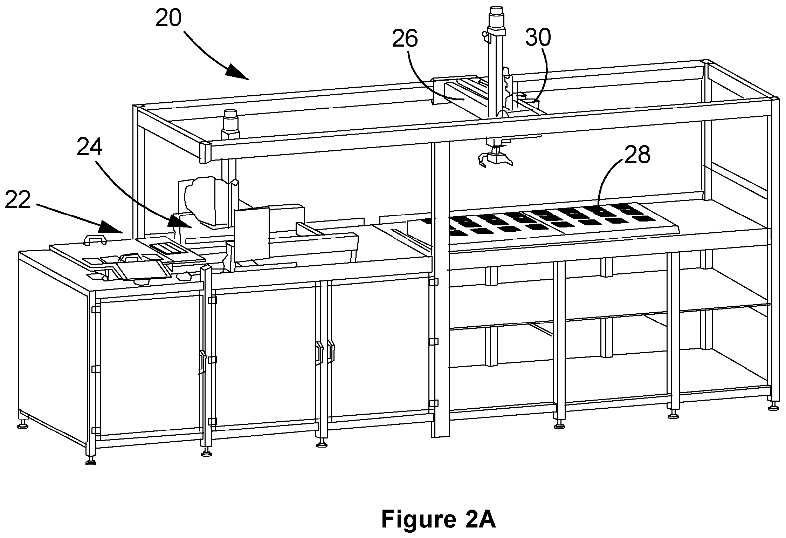

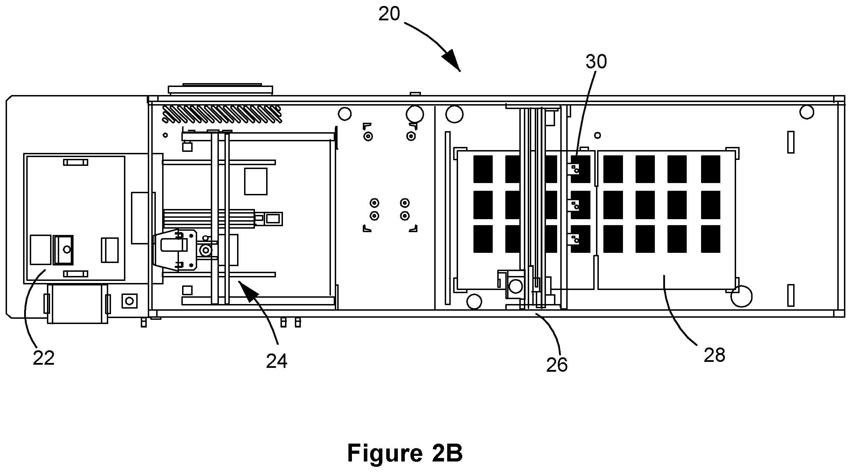

Figure 1 illustrates the method 10 of testing a sample for the presence of a virus using an analyser 20, and components of the analyser 20 are illustrated in Figures 2A and 2 B. Step 1 of the method 10 collects saliva samples from individuals. The collected saliva samples are then inserted into test tubes which are placed in racks in which they are heated in an oven for approximately 10 minutes to inactivate the virus (step 2). The test tubes are then automatically uncapped (step 3) and placed on a loading bed 22 of the analyser 20. The samples in the racks are QR-scanned on the loading bed 22 using a QR scanner of the analyser 20. The analyser 20 comprises an automated pipetting station 24 in which also microplates with sample wells are positioned. In the described embodiment each microplate has 96 samples wells. Reagents are located in the sample wells of the microplates. After the loading bed 22 with the racks and test tubes is shifted into the pipetting station 24, the samples are transferred from the test tubes into wells of the microplates. The wells of the microplates with the reagent in the wells are I initially sealed by a sealing film, but the sealing film can be penetrated by needle-like portions of the automated pipetting system, which transfers the saliva samples from the test tubes into the wells with the reagent (step 5). A robotic sample transfer system 26 of the analyser 20 then transfers the microplates into an incubation station 28 of the analyser 20. The incubation station 28 can in this embodiment receive up to 32 microplates each carrying up to 96 samples. The incubation station is heated to a constant temperature using solid state heater elements, which are controlled by a temperature controller. The samples are incubated for typically 30 minutes to complete a LAMP assay reaction.

The analyser 20 is arranged for concurrent or sequential testing in fluorometric mode and colorimetric modes and comprises light sources for both modes. In this embodiment illumination for the colorimetric measurements is transmitted through the samples using suitable light sources such as LED light sources with filters. Light for exciting fluorescent light is also generated using suitable LED light sources with filters. Emitted fluorescent radiation and transmitted light for calorimetric measurements is detected using a scanning camera system 30. The scanning camera system 30 comprises in this embodiment one or more digital cameras which image the samples in order to detect changes related to progress of the LAMP assay reaction. The one or more cameras of the scanning camera system 30 are computer controlled. Photographic results are then analysed (step 8) and, when the analysis indicates that the LAMP assay reaction is completed for a particular group of samples (such as samples in a microplate), the robotic system 26 is automatically informed and removes the particular microplate leaving a vacant position, which may be at a random position within the incubation station and may be surrounded by microplates with samples for which the processing is not yet completed. The robotic system 26 then obtains a microplate with fresh samples from the sample loading station 22 and moves that microplate with fresh samples into the vacant position in the incubation station 24. In this manner the analyser 20 is suitable for continuous throughput of samples, which facilitates very high throughput operation not possible with a batch processing technique.

In one further embodiment the analyser 20 is one of two or more analyser assemblies with one or more sample processors forming an analyser system (Figure 1). For example, the analyser system may comprise two of the analysers 20 arranged for simultaneous operation. In this example the robotic systems of each analyser 20 may be arranged such that microplates are directed to one rather than the other analyser 20, depending on the utilization rates, by a control system to optimize the efficiency and minimize queue times of the analyser system.

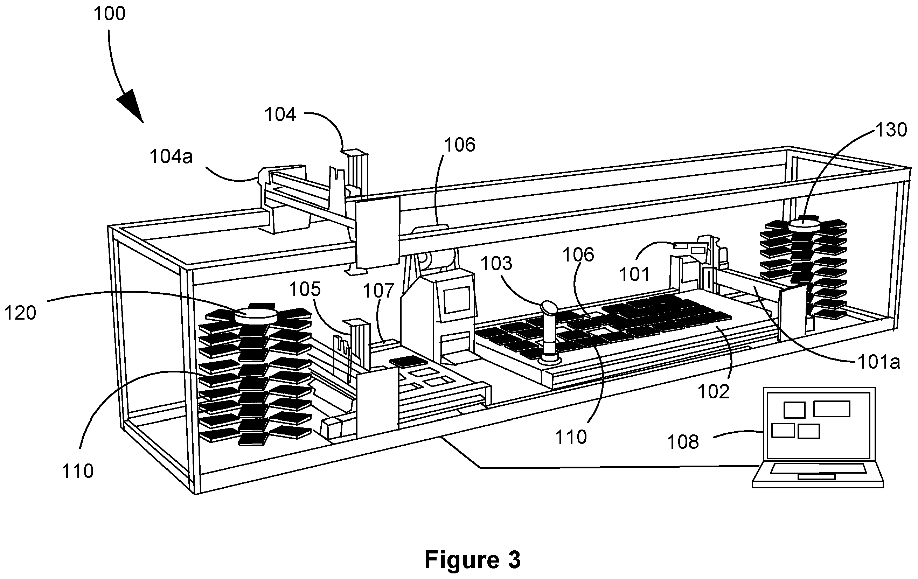

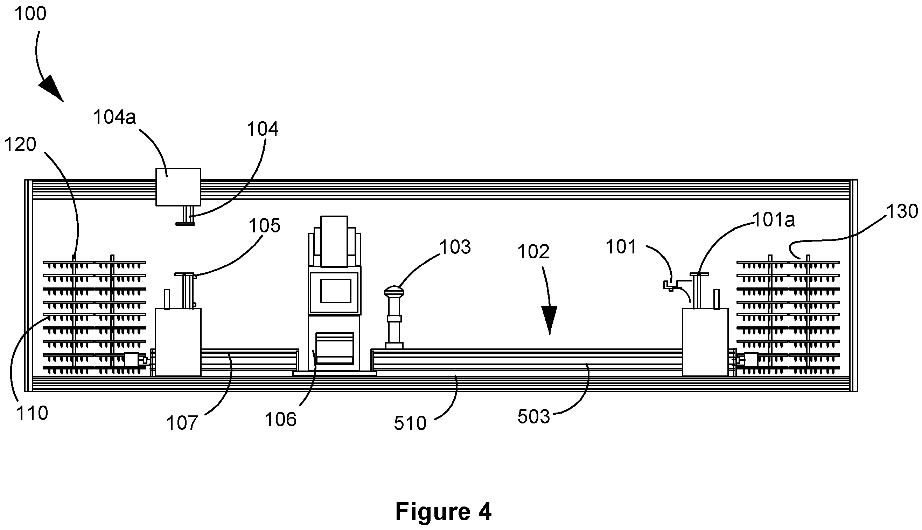

Referring now to Figures 3 and 4, an analyser for high-throughput assay testing for the presence of a biological or biochemical substance in accordance with a further embodiment of the present invention is now described. Figure 3 shows a perspective view of the analyser 100 and Figure 4 shows a side view of analyser 100 of Figure 3.

The analyser 100 comprises a multi-camera scanning subsystem 101a is provided with a cartesian x-y rail system for manoeuvring cameras 101 attached to subsystem 101 across a multi-server (multi-station or multi-slot) incubation field 102. Incubation field 102 is optionally monitored and controlled by incubation controller 103, which may be, for example, a commercial sous vide temperature controller or alternatively a heater block. Incubation field 102 is coupled to thermal control system (incubation controller103), capable of maintaining temperatures for a plurality of microplates' contents at a constant 'isothermal', or optionally time-modulated, temperature. In an embodiment adapted for high throughput assay analysis of the SARS COV 2 virus, incubation controller 103 is configured to ensure the samples in wells 111 of multi-well plates 110 are kept at a constant reaction temperature of 65°C.

The analyser 100 enables greater flexibility in the testing parameters for each unique microplate within the analyser 100 since each of the individual microplates passing through the analyser 100 are completely independent of each other. Accordingly, it is readily possible to process each individual microplate separately from other microplates in the system, for example with individually assigned reaction reagents, unique, programmable, incubation times and/or unique analysis time frames. This enables analyser 100 to process and analyse each microplate in the system uniquely and indendently, for example, to accommodate different reaction chemistries or target biological or biochemical substances. In particular, the incubation time per microplate is "programmable" per microplate and subject to the specific reaction chemistry being used for that specific microplate. The incubation field 102 of analyser 100 is able to support multiple concurrent and independently monitored chemistries, one per microplate. Given that the occupation time in the field of a given microplate is independent of the other microplates, it is possible to support a plurality of non-uniform incubation times across the incubation field 102, providing great operationalflexibility in running multiple reaction batches (in the limit one batch per microplate), eachof which being parallel to each other, all on the one platform, simultaneously.

In a particular embodiment of analyser 100, scanning subsystem 101 comprises atwo-dimensional (2-D) cartesian (for x-y horizontal plane coverage) robotic sub-assembly containing one or a plurality of optical sensing devices or cameras. The optical sensing devices are used to capture in-progress incubation measurements on the plurality of sample wells contained within a plurality of microplates located within incubation field 102.

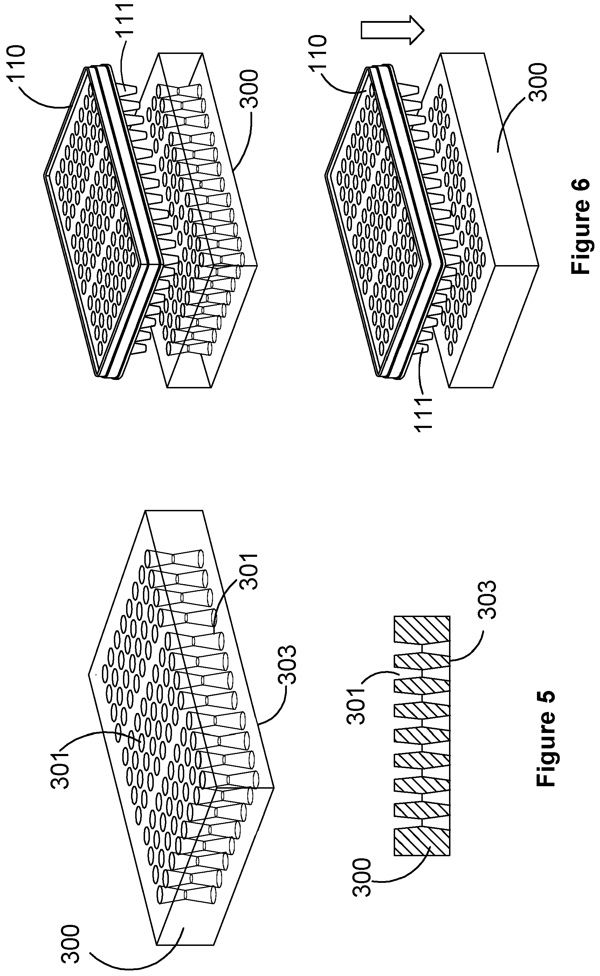

In particular embodiments of the invention, incubation field 102 comprises either a 1-D or 2-D array of thermal incubation positions or slots 106 adapted to receive a microplate 110 comprising a plurality of samples for testing. In other particular arrangements, slots 106 may be adapted to receive a holder such as block 300 seen in Figure 5, where block 300 is adapted to receive sample wells 111 of a microplate 110.

Analyser 100 further comprises a three-dimensional (3-D) cartesian (x-y-z 3-D volume coverage) robotic sub-assembly 104a containing a microplate gripping sub-system 104 ("Plate Crane"), to acquire and subsequently move microplates 110 through the workflow of analyser 100.

During the process workflow, a fresh multi-well microplate 110, a plurality of racks of test tubes containing samples for analysis in sample wells 111 (see Figure 6), are loaded into a sample carrier tray 120. The sample carrier tray 120 is moved into position in order to be within reach of the liquid handling and pipetting gantry and liquid handling heads 105. The liquid handling head, using a pipetting function, transfers aliquots of samples from the test tubes in the racks on the carrier tray 120 onto the individual wells 111 of the fresh microplate 110, and then using a different set of pipette tips transfers a quantity of LAMP reagent into each well 111 on the microplate 100. Once this processing has completed, the microplate 110 is then transferred by plate crane 104 to microplate sealing station 106 where the sample-containing wells of microplate 110 are sealed before being transferred to incubation field 102 via microplate queuing (holding) field 107. Queuing field 107 is utilised to hold pending microplates awaiting their turn to be sealed by the optional sealer unit 106 and processed in the incubation field 102.

Analyser 100 further comprises a system resource controller 108 which may, for example, be a computer machine comprising a software application with programming adapted to schedule the movement of microplates 110 through analyser 100 in an optimized manner to ensure that the time each microplate 110 is held within incubation field 102 is sufficient to facilitate a colorimetric or fluorometric reaction to occur within sample wells of microplates110, in order to determine a positive or negative test result for each sample in wells of multi-well microplates 110. System resource controller 108, whose function is to monitor the occupation state ("busy"/"free") of each of the plurality of Incubation Slots (microplate receiving slots) in the incubation field 102, efficiently schedule the deployment of microplates 110 into available slots in incubation field 102 and efficiently schedule the removal of microplates 110 from the incubation field 102 once their processing is completed and transferring the analysed microplate 110 to used carousel 130, thereby freeing up a slot for a new microplate to be processed.

Once analysed by scanning subsystem 102, microplates 110 are removed from incubation field 102 by plate crane 104 and placed in optionally used microplate carousel 130 for manual removal from analyser 100.

Particular embodiments of analyser 100 may further comprise a sample preparation/purification/inactivation module which may include a heating bath or block (not shown) capable of holding a temperature within the range of 95°C-100°C for lysis and inactivation of viruses such as SARS COV 2 virus and/or the inactivation of RNAse enzymes present in the sample.

Particular embodiments of analyser system 100 may further comprise a heat inactivation station and test tube de-capping station (shown in Figure 1), that can efficiently de-cap racks of 24, 96 or 384 sample tubes at a timefor transfer to fresh microplate sample carrier tray 120. Plate crane 140 may be further adapted to transfer microplates containing samples from incoming racks of de-capped sample tubes to be analysed.

Other embodiments of the sample preparation module of the system may include sample enrichment or purification stations, including but not limited to the use of cellulose or silica to selectively bind to nucleic acid in the sample, to allow for the removal of enzyme inhibitors from biological samples and allow for the purification and/or concentration of nucleic acids for subsequent amplification by the main module of the system.

A significant advantage of analyser 100 over existing high-throughput systems is that the sample incubation is performed simultaneously with the scanning/optical detection stage, regardless of what stage each sample plate is at in the screening process. Other high throughput assay systems are more constrained in the scheduling of different, albeit staggered assays, and therefore do not support true random-access application. The plurality of samples in each multi-well microplate 110 are incubated within the incubation field 102 whilst the samples are interrogated calorimetrically by scanning subanalyser 1001a and cameras 100. In an alternate embodiment, 2-D scanning subsystem and cameras 102a may be replaced with either a single fixed camera, or a plurality of fixed cameras located above incubation field 102 and adapted to monitor eachmulti-well sample held within a microplate 110 in incubation field (102). Efficiently management of the simultaneous incubation of many samples within incubation field 102,exemplarily a 1-D or 2-D array of a plurality of microplates containing samples, where samples are incubated in isothermal conditions, enable significant improvement in the throughput of analyser 100 for analysed samples.

Figures 5 and 6 show an example configuration of a microchannel microplate carrier or heat block 300 adapted to receive a microplate 110 as described above. Heatblock 300 comprises a plurality of apertures 301 adapted to receive individual sample wells 111 of microplate 110. Apertures 301 extend through the whole thickness of heat block 300 to permit optical illumination from the rear 303 of the heat block 300 to illuminateeach well 111 of a microplate 110 situated in heat block 300.

In particular arrangements, microplate carrier 300 is formed from a material including, for example, nylon, TCPoly Ice9^{™} or Aluminium. In operation, the microplatecarrier 300 operates as a heat block which is maintained at a constant temperature to provide heating of the samples in each well 111 of microplate 110 to quickly bring the samples to be tested in wells 111 to their optimum reaction temperature.

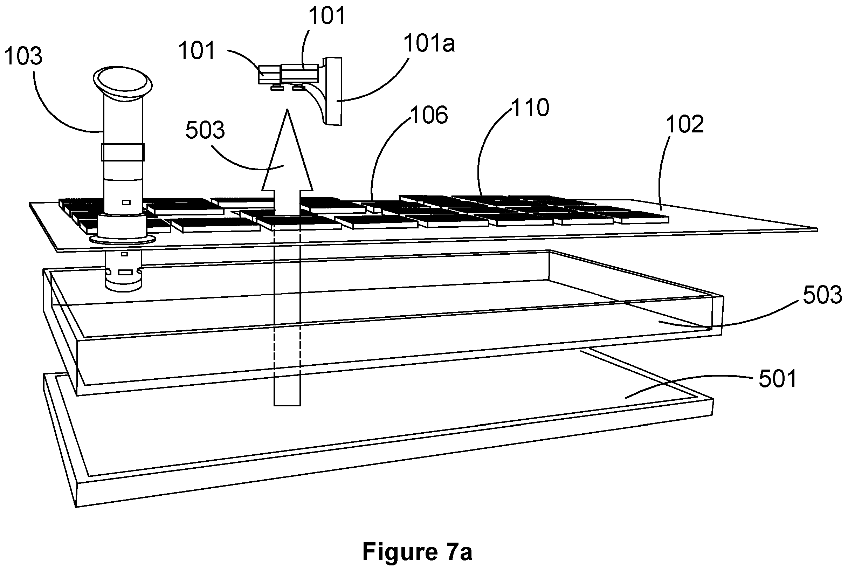

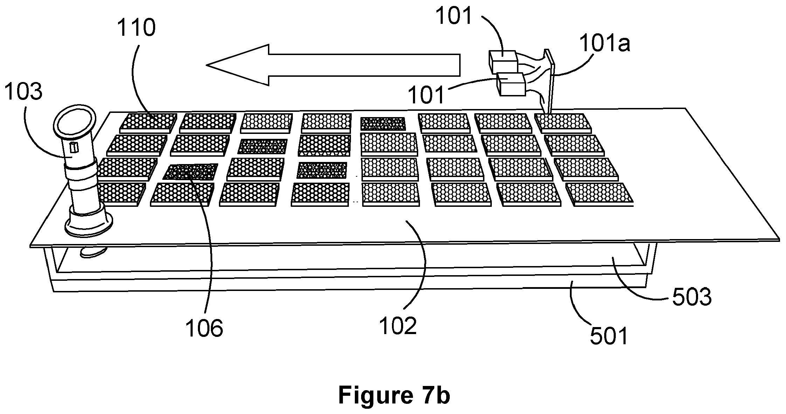

Figures 7A and 7B show a detail view of incubation field 102 for simultaneous incubation and scanning using machine vision from cameras 101 on camera subassembly 101a for scanning samples contained in wells 111 of multi-well microplates110 in each microplate slot 106 of incubation field 102. Computer vision algorithms detect the centre of each microplate well 111, as the scanning camera heads 101 pass over themicroplates 110 within incubation field 102 to generate static images of each of the microplates 110 and samples in sample wells 111 from the live feed of cameras 101.

Incubation controller 103 maintains the incubation field 102 at the correct temperature for activation of the enzymes used in the sample analysis (65°C in the caseof thermostable reverse transcriptase and/or DNA polymerase enzymes used in LAMP reactions).

A light panel 501 is situated beneath incubation field 102 and is adapted to provide uniform back-illumination light 503 to the rear of microplates 110 located in slots106 of incubation field 102. Light panel 501 bay be, for example an LED panel providinguniform illumination across incubation field 102 to eliminate any edge illumination or vignette effects often experienced by existing large area high throughput machines which limits the signal to noise ratio for colorimetric analysis of samples in wells 111.

Light generated by panel 501 below incubation field 102 of analyser 100, initially passes through optically clear water bath 503. Water 503 bath provides efficient heat transfer to the heat block 300 and (through water's specific thermal capacity) maintenance of stable temperature of the samples in wells 111* of microplates 110 heldin heat blocks 300. In a variation of the described embodiment the water bath hating system may be replaced with a solid-state heater. Light 501 then enters apertures 301 through the rear 303 of heat blocks 300 thereby to illuminate samples contained in wells 111 of microplates 110 in thelncubation field 102 and then to cameras 101 of scanning subassembly 101a which record the colour of the sample in wells 111. In RT-LAMP testing for the of the SARS-CoV-2 virus, for example, a positive result is typically indicated by a colour change of the sample from pink to yellow. This reaction typically takes approximately 15 to 30 minutes to occur, with variations in the time for the reaction to change being indicative of the viral load of the particular sample, with a higher viral load sample changing to indicate a positive result in a shorter period of incubation time.

The profiled shape of through apertures 301 of block 300 assist in decreasing the possibility of cross talk between optical reaction signals emitted from the wells 111 within apertures 301, which may enhance the signal to noise ratio of the detected colorimetric or fluorescent signals, thus making the system more impervious to ambient lighting or changes thereof during testing.

Scanning subsystem 101a in particular arrangements, is configured to scan cameras 101 across the entire incubation field at a rate of at least once per minute. At this rate, and utilising 96 channel microplates 110 in a 4x8 array in incubation field 102 provides a sample testing rate of 3072 sample readings per minute. Since the reaction time of the RT-LAMP method is approximately 15 to 30 minutes, the sample plates are held in the incubation field 102 for at least this long or longer, say up to 30 to 60 minutes, with a sample measurement for each microchannel well 111 of at least once per minute. Therefore, analysis of the sample measurements for each individual well over the typical reaction time provides an accurate measurement of the time each positive sample takes to return the positive colour change reaction signal, as well as an indication of the viral load of each positive sample.

In alternate embodiments, scanning subsystem may be replaced with a plurality of fixed cameras (not shown) situated above incubation field 102 for continuous monitoring of the optical reaction signals from samples in individual wells 111 of microplate 110. In this embodiment, additional image processing of the recorded optical colorimetric or fluorescent signals as would be appreciated by the skilled addressee would likely be necessary to correct for line of sight or perspective artefacts arising fromsamples located at the periphery of the combined viewing field of the plurality of fixed camera positions.

Rapid throughput of analyser 100 is achieved primarily through the use of the combined incubation and scanning of the samples in the incubation field of the analyser 100 thus enabling, in a particular arrangement as shown in Figures 1 and 2, of processing 32 96-mirochannel microplates 110 in parallel. Coupled with automated sample scheduling and transfer enabled by microplate crane 104 and 3-D volume x-y-z robotic sub-assembly 104a, analyser 100 is able to process 32 prefilled microplates simultaneously, every 30 minutes for a sample through put rate of approximately 5,500 samples per hour (including controls) and more than 100,000 samples per day sustained throughput. This is an improvement of greater than two orders of magnitude (100x) throughput comparedwith state of the art PCR testing platforms such as the Roche *Cobas 6800, the Holologic Panther and the Abbott Molecular Alinity Instruments,* which are only capable of analysing a few thousand SARS-CoV-2 tests per day, with limitations in the number of microplates which can be loaded at a time. Other high throughput molecular diagnostic systems are considerably more expensive as they have a lower ratio of detectors to sample wells.Tests conducted on currently available analysers, which take hours rather than minutes to perform.

With such a throughput rate which could exceed 100,000 per day, it is possible to deliver sample results to stakeholders in under one hour of the sample being collected, and typically in under 40 minutes. This technology then allows for near real-time testing and analysis of large-scale sentinel testing of entire suburbs, cities and towns; high-traffic environments, such as airports, departures and arrivals; crowdedplaces, such as schools, sporting stadia, festivals, shopping malls and ships; as is necessary for pandemic level infections such as the SARS COV 2 virus pandemic of 2020, where it is desirable to test asymptomatic persons as well as symptomatic ones to limit the possibility of unknown-link community transmissions.

In particular embodiments, an authorised tester provides a test subject with a barcoded saliva sample vial. When the subject has filled the vial, the tester scans the vial barcode to create a personal ID associated with the barcode. In particular use cases such as airport or large sporting orconcert event environments, additional information may be associated with the subject'spersonal ID, for example a boarding pass or event ticket. A plurality of sample vials are loaded into a barcode-identified vial rack such that analyser 100 may scan each individualvial barcode and associate the vials with a unique position in the vial rack. Following anoptional heat inactivation/purification step described below, samples in vial rack are transferred to a barcode-identified microplate 110 which records the location of each sample within a particular sample well 111 of microplate 110 and associates the sample'swell position with the subject's personal ID. The microplate 110 is then loaded into microplate sample carrier tray 120 of analyser 100 for analysis through analyser 100 as described above. As the microplate is being incubated in incubation plane 102, camera 101 captures the transition of the colorimetric state of each sample in the microplate 110and logs the image result to a centralised server system (not shown) which may advantageously be a cloud server system, along with the final test result, inclusive of anestimate of the viral load (log value) for each positive test result, which can then be reported back in real-time or near-real-time to the subject through the subject's personallD or, alternatively or simultaneously, to authorised stakeholders such as management personnel, government departmental officials or health officials as necessary. The recorded test results are advantageously stored in a common format e.g. CDC approvedformat, for each of reporting to foreign or international health bodies as appropriate.

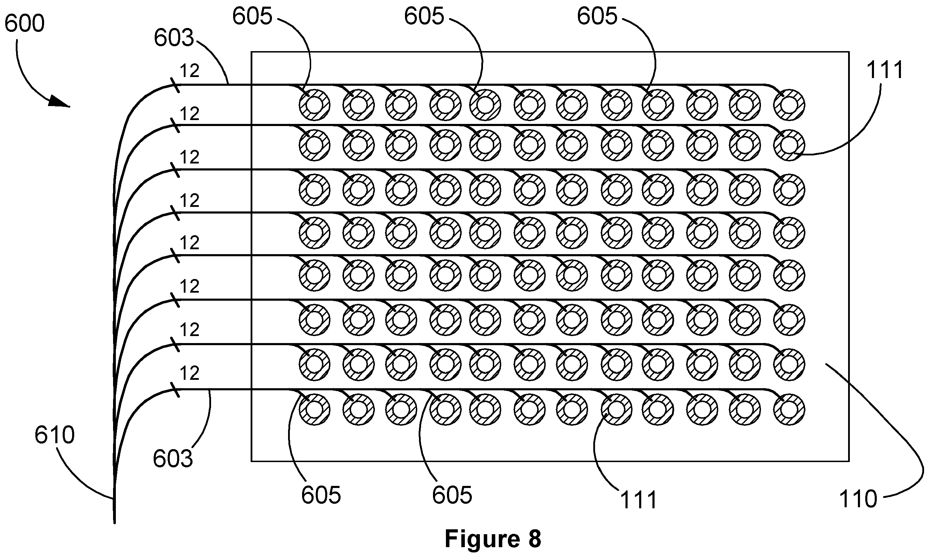

In a further embodiment, analyser 100 can be readily converted to a multi-well fluoroscopy analysis system. Rather than a uniform light panel 501 illuminating the sample in each well 111 of microplate 110 from underneath, the system may optionally include a fibre optic bundle connected with each microplate slot 106 in incubation field 102. As shown, for example in Figure 8, configuration 600 comprises fibre optic bundle 601 comprising (12*8) 96 optical fibres in 8 fibre sub-bundles 603, each sub-bundle 603 comprising 8 optical fibres 605. Each optical fibre 605 is aligned with a well 111 of microplate 110 so as to illuminate a sample in each well 111 from the rear (i.e. through the rear of aperture 301 of a heat block 300 containing the microplate 110) or alternatively from the side of aperture 301 and therefore to excite a fluorescence signal in the sample, which fluorescence is then detected by camera or photomultiplier 101 mounted on camera scanning subsystem 101a. The fluoroscopy analysis system variant of system 100 may readily be adapted for multiplexed fluorescence fluorophores to target testing of multiple genes simultaneously. Such a multiplexed system may be readily adapted for targeting two distinct genes in a sample along with a control fluorophore to achieve 'one-pot' high sensitivity/specificity testing of large numbers of samples simultaneously.

In a further advancement of a fluoroscopy analysis system, employing fluorescentimaging, microplates 110 containing samples which are identified as positive during the incubation can be removed from the array and subjected to an annealing assay (incorporated within or without analyser 100), to confirm amplicon specificity by allowing nucleic acid hybridisation assay monitoring duplex annealing kinetics.

Systems with high throughput characteristics also often have significant information management demands, for instance, to track the movement of a plurality of samples and their plurality of incubation states through the analyser 100. The system mustbe able to associate sample incubation results either with a known user identity or obfuscated "hashed" token that anonymously represents a user or users associated withthe sample being analysed.

To this end, methods are deployed that support the rapid tracking and identification of samples as they traverse through the system, whilst ensuring throughputrates are not compromised.

As described above, the combination of incubation and scanning of colorimetric or fluorometric sample indications at scale, substantially beyond the scale of a single 96-well plate or even a 384-well plate are able to be processed with the systems described herein. In particular, it is possible for a plurality of low-cost cameras are able to image the contents of wells in a microplate with high fidelity, enabling accurate colorimetry or fluorometry to be carried out without the use of expensive photo-multiplierdevices.

The analyser 100 above has been described herein with particular application to rapid, large-scale testing for the SARS Cov-2 virus, however, it will be readily appreciatedby the skilled reader that analyser 100 may also be used for rapid large-scale viral, genomicor microbial assay testing for a wide variety of specific applications. The ultra-high-throughput nature and cost effectiveness of the screening systems and methods described herein, also allows for its implementation in, for example, large scale surveillance genetic screening for spontaneous mutations or other low frequency alleles in populations. Such surveillance can allow for identification of rare alleles which may be associated with risk factors for disease such as cancer, diabetes, heart disease, high blood pressure, or alternatively certain alleles associated with adverse drug interactions. Note that the technology described herein, is also compatible with screening for multiple alleles simultaneously, allowing surveillance of multigenic disease signatures.

In one particular embodiment, a system for analysing chemical or biochemical samples uses algorithms such as those described herein to orchestrate and schedule efficiently the arrival, processing and departure processing stages of microplates containing such samples as they pass through the analyser 100. This system advantageously comprises several processing sub-stages. It includes a system controller 108 responsible for managing the efficient processing of samples and scheduling of microplates 110 as they are moved through the analyser 100, being transferred by microplate gripping sub-system 104. The system controller 108 manages the overall analyser 100 as a trunked queueing system to maximise the utilization of the scarce resources within the analyser 100 needed for processing the microplates and their samplesthrough the system.

Furthermore, system controller 108 uses further algorithms such as those described above or which would be readily apparent to the skilled addressee to optimizethe throughput of microplates 110 through a trunked set of resources (i.e. incubation slots106) whilst simultaneously ensuring that the multiple pieces of robotic equipment, in motion from time to time, can perform the various functions of the system to support such throughput, and are neither colliding with each other nor interfering with each other's function.

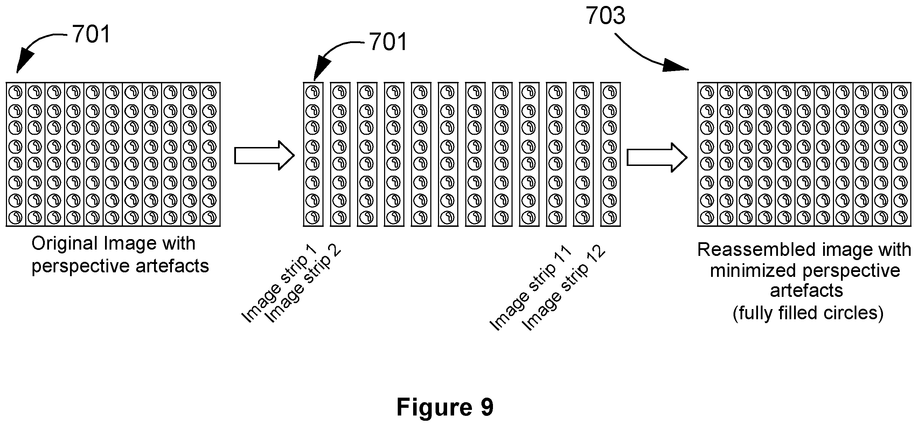

In a further embodiment, robotically controlled scanning systems 101a are used to monitor the progress of chemical reactions in the samples contained in the microplates 110. This scanning system is configured to repeatedly pass above the microplates 110 containing samples undergoing a reaction. For example, the scanning system 101a may use cameras, such as currently available low-cost digital cameras, but other scanning technologies will be apparent to those skilled in the art. Adaptive image scanning techniques enable such camera-enabled scanning sub-system to mitigate parallax error when imaging the contents of microplate wells that are not fully filled, separated in space and arranged as a physical 2-D array on a microplate. This mitigationis achieved by segmenting the image into thin image strips as shown in Figures 8 and 9.

Each strip image containing a single row of microplate wells 111 wherein the imaged row of wells 701 and 801 was positioned vertically below the imaging subsystem, such image strips captured sequentially as the camera traverses the microplate being scanned. The system subsequently re-assembles the image strips into an aggregated image 703 and 803, representing the entire microplate, creating the effect that each row of wells was simultaneously below the camera imaging subsystem, thereby minimizing any visual distortion that may have accrued by attempting to image wells off the main vertical focal line of the scanning imaging subsystem.

In a further embodiment, multiple cameras in imaging subsystem 101a can be arranged in a 1-D array perpendicularly to the travel direction of the scanning imaging subsystem, in such a manner that each camera can capture a segment or fraction of a row of wells on a microplate, in the limit (but not necessarily) of one camera per well. Using such a camera array and taking advantage of the inherent motion of the scanning subsystem 101a, it is possible to significantly mitigate against imaging defects arising from attempting to image wells that are "off-normal" in relation to the imaging subsystem located above the microplates being scanned and thereby recreating an image wherein all the wells of a microplate array are internally normalised and dynamically measured continuously.

In a further embodiment, it is possible to exploit the independent accessibility of all microplates in the array within incubation field 102 which are not currently being imaged, in order to enable orthogonal intervention or analysis. Such approaches are notpossible with conventional instrumentation due to the physical constraints imposed by a fixed imaging position.

The inflexible configuration of conventional nucleic acid amplification and detection equipment imposes constraints which prohibit continuous steady state or quasi-steady state operation. By contrast, the configuration described above uniquely allows microplates 110 to be added to and removed from to the workflow either randomly, scheduled or queued, in real-time while the instrument is running, to enable continuous, steady-state, or quasi-steady state operation.

By contrast to conventional instruments, the analyser 100 disclosed above allows for individual plates to either be manipulated in situ, mid-incubation cycle with the addition or subtraction of reagents, or alternatively even for plates to be removed from the array, to allow for such interventions or additional analyses to occur external to analyser 100.

In the case of instrument failure, the analyser 100 disclosed above allows plates causing the workflow blockage to be removed in real-time without excessive delays, liberating a plate incubation slot 106 to be occupied by a new plate 110. By contrast in conventional instruments, such a plate removal would cause blockage of the entire workflow, greatly reducing throughput.

The modular nature of the instrument configuration of analyser 100 above also allows for dynamic decontamination of particular zones of the instrument (for example using UV irradiation), while those zones are not in active use.

Such UV irradiation can be used for inactivating any potential nucleic acid contaminants by inducing thymidine dimers, rendering them useless for subsequent enzymatic amplification.

The self-contained nature of the instrument allows for the incorporation of intergrated window panels around the outside of the device. These panels can serve a safety purpose in protecting users from exposure to pathogens or to UV light.

In one embodiment the protective panels of the instrument are able to be electronically dimmed when required, by virtue of the passage of electrical current whichrenders them opaque. Glass windows which can achieve this include the following materials: PDLC (Polymer Dispersive Liquid Crystal), EC (Electrochromic), and SPD (Suspended Particle).

In further embodiments, methods ("Multi-machine Throughput Optimisation Methods") are further utilised that provide additional throughput maximisation control andmonitoring for systems with multiple stations each containing a single resource slot (e.g.slot 106 of incubation field 102 within analyser 100) or a plurality of resource slots.

A further set of methods may provide visual or electromechanical cues to human operators of a laboratory workflow as described herein to permit and assist the incorporation of manual processing steps as needed (by way of potential example, steps not amenable to automation), into an overall optimised workflow, whilst the system described herein maintains overall control and responsibility for scheduling and sequencing all necessary steps to optimise overall throughput, whether those steps be manual or automatic (under direct control of the system).

In particular embodiments of analyser 100 described herein, the Incubation Slot Trunking Controller 108 acts as the central orchestration entity, using proprietary and novel scheduling algorithms, such as, for example, those algorithms as discussed above,*firstly* to maximise the throughput of microplates through the system by coordinating the sequencing of the timing of physical movement of microplates through the system, specifically orchestrating the sequencing of actions be handled by the Scanning Assembly, the Plate Crane and Sample Transfer Station, and *secondly* to minimise the end-to-end time taken in processing an individual microplate, including queueing and handling delays.

The following methods are disclosed that support these goals:
A set of methods for tracking ("Tracking Function") the movement of microplates through a complex, multi-stage workflow using barcodes for tracking, verification and identification of the individual samples as they progress through the system. Two methods and apparatuses to improve the efficiency of certain workflows are disclosed to support the Tracking Function:
A system for tracking the location and state of an individual sample as it progresses through a multi-stage sample preparation and analysis workflow, comprising:
Firstly, a dual-purpose "Tracking and Sample Transfer Station" in the sample preparation stage of the system, configured with scanning cameras below the station, preferentially capable of holding a rack of test tubes with an open aperture below the testtube rack that allows for scanning of barcoded information, whilst other operations are carried out on the contents of the test tubes. This station may advantageously have oneor more optional illumination sources located underneath the sample rack to ensure high-fidelity scanning of bar codes on the base of each test tube. A sample transfer mechanism is supported that can be operated simultaneously to the scanning function underneath the samples, permitting both the simultaneous scanning from below of a plurality of barcodes on the bottom of test tubes in a rack, whilst simultaneously performing a transfer of the contents of each of the test tubes to another medium to holdthe contents for further processing, preferentially a microplate with a plurality of sample wells, saving operational time compared to a sequential scanning and sample processingworkflow.

Furthermore, analyser 100 may advantageously include an additional barcode scanner, capable of scanning coded information on microplates passing through the system, that captures barcoded information on the sides of microplates. This scanner ispreferably designed to operate in parallel with a subsystem that scans the contents of themicroplates from above, to detect reaction changes in the wells of the microplates, savingoperational time and reducing error.

Furthermore, there is provided a predictive method to schedule deployment and removal of microplates into the incubation field 102 ("Trunking Function"), with the goal to use the limited incubation resources in the incubation field as efficiently as possible, whilst maximising system throughput and minimising overall plate processing delay through the system. Several methods and apparatuses are disclosed to support the Trunking Function:
In particular embodiments, the algorithms used for manipulating the microplates 110 for processing and analysis may take the form of a method for implementing a plurality of adaptively set priorities for a system 110 of a plurality of queues, serviced by a single physical entity, exemplarily a plate crane 104a, to handle the orderly movementof queued entities through a multi-stage, end-to-end system. In one example embodiment, four (4) such priority queues are implemented, wherein the priority of processing the contents of one queue is set to be either the highest or lowest priority, based on the occupation state of the resource(s) (e.g. microplate slots 106 of incubationfield 102) associated with that queue. In this embodiment, if a given resource capable ofservicing multiple entities is fully occupied, the priority of the queue to manage the removal of entities, by way of example due to timeouts expiring or processing durations having been achieved, is set the maximum (top) priority, whereas if there is still capacitywithin the resource for additional entities, the priority of this queue is set to the lowest possible priority. This scheme supports adaptively changing priorities based on how busythe system is to process critical potential bottlenecks as the next top priority.

In a further embodiment there may be provided a method of swapping elements in the overall processing queue based on certain optimisation criteria, exemplarily the length of travel needed by a plate crane 104a, responsible for processing steps arising from all priority queues, to execute certain operations. In one example embodiment, the analyser 100 might detect that a microplate in the incubation field 102 is scheduled for removal, followed immediately by the schedule insertion of a new microplate 110 into the incubation field 102. If the analyser 100 then determines that either the overall processingtime or the overhead processing time can be reduced by swapping the timed sequence of these operations, based on system policy, it can take the needed steps to perform suchswapping.

Furthermore, there is provided a predictive method to coordinate the movement of multiple robotic entities operating in a shared time and space environment ("Coordination function"), to avoid collisions between subsystems, whilst maximising system throughput and minimising overall plate processing delay through the system. Several methods are disclosed to support the Coordination Function, including:
▪ a method implementing an algorithm to simultaneously predict the future position of a plurality of robotically controlled entities, all operating dynamically in the same 3-D space continuum;
▪ a method as described above that further calculates an ensemble ("Ex Ante Ensemble") of future 3-D trajectories associated with said plurality of robotically controlled entities;
▪ a method as described above that uses the state of other entities to determine the timing of future planned 3-D trajectories;
▪ a method as described above that uses the timings above to create a 4-Dspace-time ensemble of potential future collisions;
▪ a method as described above that uses the ensemble of potential futurecollisions to calculate an optimal alternative ensemble of future 3-D trajectories, associated with said plurality of robotically controlled entities,wherein all projected collisions are eliminated (*"Ex Post* Ensemble");
▪ a method as described above that replaces the *Ex Ante* Ensemble with the *Ex Post* Ensemble of scheduled future 3-D trajectories to prevent future collisions. Furthermore, there is provided a method to scan the contents of an array of microplates to deliver real-time information on incubation results ("Scanning Function"), row-by-row and well-by-well, to overcome potential information loss from parallax error, managing the scanning process and coordinating with other robotic elements to maximize system throughput and minimise overall plate processing delay through the system. Several methods are disclosed to support the Scanning Function, including:
• a method to capture one or a plurality of images or photographs ("Image"or "Images") of a plurality of microplates being incubated by the inventiondescribed herein;
• a method as described above that further controls a robotic imaging device ("Imaging Subsystem") to position said Imaging Subsystem in a 2-D plane according to (x-y) coordinates passed to the Imaging Subsystem;
• a method as described above that uses an algorithm to analyse one Image out of the plurality of Images taken at different (x-y) coordinate positions;
▪ a method as described above that uses computer vision algorithms to characterise the quality of the Image, pursuant to a plurality of pre-defined quality criteria, and exemplarily characterising how well the contents of a row of wells on the microplate being imaged are being detected;
• a method as described above that selects a preferred Image from a plurality of Images, based on the detected quality of the Image, and thenusing the selected Image extracts a sub-image ("Sub-image") for each well on a row on a microplate;
• a method as described above that derives, calculates or imputes certain properties and attributes ("Sub-image Attributes") of each Sub-image extracted from an Image;
• a method as described above that collates and log the captured and derived Sub-image Attributes to a central logging entity ("Logging Entity")for reporting and audit purposes.

Furthermore, there is provided an integrated screening system which allows for steady state or quasi-steady state operation by allowing continuous or semi-continuous inputs and outputs of samples in the system. For example, the integrated screening system minimises downtime by allowing removal or substitution of individual plates in theworkflow for the purposes of inspection, manipulation or assay, without undue delay.

The integrated screening system may be compatible with fluorescent imaging, byvirtue of incorporating excitation light source delivered to each well of the array blocks viaa reticulated system of optical fibres, which can be activated independently to minimise the potential for photobleaching and to allow for distinct excitation wavelengths of light tobe directed to different wells if required.

As will be described in further detail below, the analyser 100, provides a system for improved throughput molecular testing and analysis systems and methods combining computer vision technologies, cartesian robotic and liquid handling automation technologies. Such combinations and apparatus described above cooperate synergistically to realize a high-performance, high throughput system that processes and analyses LAMP assays in real-time, while operating in a constrained or compact workspace.

### INTERPRETATION

### Composite Items

As described herein, 'a computer implemented method' should not necessarily be inferred as being performed by a single computing device such that the steps of the method may be performed by more than one cooperating computing devices.

Similarly objects as used herein such as 'web server', 'server', 'client computing device', 'computer readable medium' and the like should not necessarily be construed asbeing a single object, and may be implemented as a two or more objects in cooperation,such as, for example, a web server being construed as two or more web servers in a server farm cooperating to achieve a desired goal or a computer readable medium being distributed in a composite manner, such as program code being provided on a compact disk activatable by a license key downloadable from a computer network.

### In Accordance With

As described herein, 'in accordance with' may also mean 'as a function of' and is not necessarily limited to the integers specified in relation thereto.

### Embodiments

Reference throughout this specification to *"one embodiment", "an embodiment", "one arrangement"* or *"an arrangement"* means that a particular feature, structure or characteristic described in connection with the embodiment/arrangement is included in at least one embodiment/arrangement of the present invention. Thus, appearances of the phrases *"in one embodiment*/*arrangement"* or *"in an embodiment*/*arrangement"*in various places throughout this specification are not necessarily all referring to the same embodiment/arrangement, but may. Furthermore, the particular features, structures or characteristics may be combined in any suitable manner, as would be apparent to one of ordinary skill in the art from this disclosure, in one or more embodiments/arrangements.

Similarly it should be appreciated that in the above description of example embodiments/arrangements of the invention, various features of the invention are sometimes grouped together in a single embodiment/arrangement, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment/arrangement. Thus, the claims following the Detailed Description arehereby expressly incorporated into this Detailed Description, with each claim standing onits own as a separate embodiment/arrangement of this invention.

Furthermore, while some embodiments/arrangements described herein include some but not other features included in other embodiments/arrangements, combinations of features of different embodiments/arrangements are meant to be within the scope of the invention, and form different embodiments/arrangements, as would be understood bythose in the art. For example, in the following claims, any of the claimed embodiments/arrangements can be used in any combination.

### Specific Details

In the description provided herein, numerous specific details are set forth. However, it is understood that embodiments of the invention may be practiced without these specific details. In other instances, well-known methods, structures and techniqueshave not been shown in detail in order not to obscure an understanding of this description.

### Terminology

In describing the preferred embodiment of the invention illustrated in the drawings, specific terminology will be resorted to for the sake of clarity. However, the invention is not intended to be limited to the specific terms so selected, and it is to be understood that each specific term includes all technical equivalents which operate in a similar manner to accomplish a similar technical purpose. Terms such as *"forward", "rearward", "radially", "peripherally", "upwardly", "downwardly",* and the like are used as words of convenience to provide reference points and are not to be construed as limitingterms.

### Different Instances of Objects

As used herein, unless otherwise specified the use of the ordinal adjectives *"first","second", "third",* etc., to describe a common object, merely indicate that different instances of like objects are being referred to, and are not intended to imply that the objects so described must be in a given sequence, either temporally, spatially, in ranking,or in any other manner.

### Scope of Invention

Thus, while there has been described what are believed to be the preferred arrangements of the invention, those skilled in the art will recognize that other and further modifications may be made thereto without departing from the scope spirit of the invention, and
it is intended to claim all such changes and modifications as fall within the scope of the invention. Functionality may be added or deleted from the block diagrams and operations may be interchanged among functional blocks. Steps may be added or deleted to methods described within the scope of the present invention.

Although the invention has been described with reference to specific examples, it will be appreciated by those skilled in the art that the invention may be embodied in many other forms.

### INDUSTRIAL APPLICABILITY

It will be appreciated that the systems, methods and apparatus described/illustrated above at least substantially provide an improved molecular assay platform that delivers significant improvements in the throughput of LAMP testing procedures for real-time or near-real-time large scale viral or microbial testing protocols.

The systems, apparatus and methods described herein, and/or shown in the drawings, are presented by way of example only and are not limiting as to the scope of the invention. Unless otherwise specifically stated, individual aspects and components of the systems, apparatus and methods may be modified, or may have been substituted therefore known equivalents, or as yet unknown substitutes such as may be developed in the future or such as may be found to be acceptable substitutes in the future. The systems, apparatus and methods may also be modified for a variety of applications while remaining within the scope of the claimed invention, since the range of potential applications is great, and since it is intended that the present systems, apparatus and methods be adaptable to many such variations.

## Claims

1. An automated analyser (20, 100) for high-throughput assay testing for the presence of a biological or biochemical substance, the analyser (20, 100) comprising;
a plurality of sample process stations adapted to receive sample vessels and optionally heat inactivate samples, transfer to multi-well plates (110) and perform one or more processing or analysis steps on the samples retained in the multi-well plates (110);
said process stations comprising at least an incubation station (28) that has an incubation field (102) adapted to:
receive a plurality of multi-well plates (110);
provide illumination (503) of the plurality of multi-well plates in the incubation field; and
maintain the plurality of multi-well plates at a predetermined incubation temperature or range of temperatures;
wherein the analyser (20, 100) further comprises:
a multi-well plate transfer system (26) adapted to transfer the plurality of multi-well plates (110) between each of the process stations;
an imaging system (30) adapted to image illuminated samples in the plurality of multi-well plates (110) retained in the incubation field (102); and
a resource controller (108) adapted to:
control the multi-well plate transfer system (26) to separately transfer each multi-well plate (110) of the plurality of multi-well plate to respective process stations for preparation and analysis of the biological or biochemical substance in accordance with a predetermined analysis process schedule;
control the imaging system (30) to optically scan the plurality of multi-well plate retained in the incubation field (102) according to a predetermined incubation period and scan frequency;
receive optical image information from the imaging system (30) of the scanned plurality of multi-well plates; and
instruct an image processor to process the image information,
wherein incubation of samples is performed simultaneously with the optical imaging and analysing of the samples for the presence of the biological or biochemical substance,
wherein an occupation time in the incubation field (102) of a given multi-well plate is independent of the other microplates assays to allow simultaneous incubation of multiple multi-well plates (110) parallel to each other and to support a plurality of non-uniform incubation times across the incubation field (102) when running multiple reaction batches, and
wherein the imaging system (30) is a scanning imaging system comprising components that move during scanning **characterised in that** the controller (108) is adapted to coordinate a motion of the multi-well plate transfer system (26) operation when transferring multi-well plates to and from the incubation field (102) with the motion of the scanning imaging system (30) to avoid collisions between the multi-well plate transfer system (26) and the imaging system (30).

2. The analyser (20) of claim 1, wherein the imaging system (30) is adapted to record images comprising colorimetric or fluorescent signals arising from the illuminated samples in the multi-well plates (110) located within the incubation field (102).

3. The analyser (20) of any one of the preceding claims, wherein the analyser (20) is configured to accept multi-well plates with fresh samples whilst in operation to permit continuous analysis operations.

4. The analyser (20) of any one of the preceding claims wherein the analyser (20) is operable as a queueing system to maximise the utilization of the resources within the analyser for processing the multi-well plates (110)with samples within the analyser (20).

5. The analyser (20) of any one of the preceding claims wherein the controller (108) is arranged to operate in accordance with a predictive method for coordinating the movement of multiple robotic entities to avoid collisions between the robotic entities, preferably the predictive method coordinates the movement of multiple robotic entities operating in a shared time and space environment ("Coordination function"), to avoid collisions between subsystems, whilst maximising system throughput and minimising overall multi-well plate processing delay through the system.

6. The analyser (20) of any one of the preceding claims wherein the multi-well plate transfer system (26) is a microplate crane system.

7. The analyser (20) of any one of the preceding claims wherein the resource (108) controller is adapted to process the image information using an image processor to determine a positive determination of the biological or biochemical substance under test.

8. The analyser (20) of any one of the preceding claims wherein the controller (108) is arranged to control the imaging system to optically scan the plurality of multi-well plates (110) retained in the incubation field (102) according to a predetermined incubation period and scanfrequency.

9. The analyser (20) of any one of the preceding claims wherein the incubation field (102) is adapted to provide uniform back illumination.

10. The analyser (20) of any one of the preceding claims wherein the analyser (20) comprises a plurality of optical fibre bundles, each optical fibre bundle being associated with a respective microplate slot of the incubation field (102).

11. The analyser (20) of any one of the preceding claims wherein the imaging system (30) is a scanning imaging system comprising at least one optical camera adapted for imaging the plurality of multi-well plates located in the incubation field (102).

12. The analyser (20) of any one of the preceding claims, wherein the imaging system (30) is adapted to scan the incubation field (102) in a 2-dimensional scan path.

13. The analyser (20) of any one of the preceding claims, wherein the imaging system (30) comprises a plurality of imaging cameras adapted to provide a combined field of view across the full width of the incubation field (102), and wherein the imaging system (30) is adapted to scan the incubation field (102) in a 1-dimensional scan path.

## Patentansprüche

1. Automatisierter Analysator (20, 100) für Hochdurchsatz-Assay-Tests zum Nachweis des Vorhandenseins einer biologischen oder biochemischen Substanz, wobei der Analysator (20, 100) umfasst:
eine Mehrzahl von Probenverarbeitungsstationen, die dazu ausgebildet sind, Probengefässe aufzunehmen und optional Proben durch Erhitzen zu inaktivieren, auf Multiwell-Platten (110) zu überführen und einen oder mehrere Verarbeitungs- oder Analyseschritte an den in den Multiwell-Platten (110) enthaltenen Proben durchzuführen;
wobei die Verarbeitungsstationen zumindest eine Inkubationsstation (28) umfassen, die ein Inkubationsfeld (102) aufweist, das dazu ausgebildet ist:
eine Mehrzahl von Multiwell-Platten (110) aufzunehmen,
Beleuchtung (503) der Mehrzahl von Multiwell-Platten im Inkubationsfeld bereitzustellen; und
die Mehrzahl von Multiwell-Platten auf einer vorbestimmten Inkubationstemperatur oder einem Temperaturbereich zu halten;
wobei der Analysator (20, 100) ferner umfasst:
ein Multiwellplatten-Transfersystem (26), das dazu ausgelegt ist, die Mehrzahl von Multiwell-Platten (110) zwischen jeder der Prozessstationen zu transferieren;
ein Bildgebungssystem (30), das dazu ausgelegt ist, beleuchtete Proben in der Mehrzahl von Multiwell-Platten (110), die im Inkubationsfeld (102) gehalten werden, abzubilden; und
eine Ressourcensteuerung (108), die dazu ausgelegt ist:
das Multiwellplatten-Transfersystem (26) zu steuern, um jede Multiwell-Platte (110) der Mehrzahl von Multiwell-Platten separat zu den jeweiligen Prozessstationen zu transportieren, um die biologische oder biochemische Substanz gemäss einem vorbestimmten Analyseprozessplan vorzubereiten und zu analysieren;
das Bildgebungssystem (30) so zu steuern, dass es die Mehrzahl von Multiwell-Platten, die im Inkubationsfeld (102) gehalten werden, gemäss einer vorbestimmten Inkubationsdauer und Scanfrequenz optisch scannt;
optische Bildinformationen vom Bildgebungssystem (30) der abgetasteten Mehrzahl von Multiwell-Platten zu erhalten; und
einen Bildprozessor anzuweisen, die Bildinformationen zu verarbeiten;
wobei die Inkubation der Proben gleichzeitig mit der optischen Bildgebung und der Analyse der Proben auf das Vorhandensein der biologischen oder biochemischen Substanz durchgeführt wird,
wobei die Verweildauer einer bestimmten Multiwell-Platte im Inkubationsfeld (102) unabhängig von den anderen Mikroplatten-Assays ist, um die gleichzeitige Inkubation mehrerer Multiwell-Platten (110) parallel zueinander zu ermöglichen und mehrere ungleichmässige Inkubationszeiten über das Inkubationsfeld (102) hinweg zu unterstützen, wenn mehrere Reaktionschargen durchgeführt werden, und
wobei das Bildgebungssystem (30) ein Abtastbildgebungssystem ist, das Komponenten umfasst, die sich während der Abtastung bewegen, **dadurch gekennzeichnet, dass** die Steuerung (108) so ausgelegt ist, dass sie eine Bewegung des Multiwell-Platten-Transfersystems (26) beim Transfer von Multiwell-Platten zum und vom Inkubationsfeld (102) mit der Bewegung des Abtastbildgebungssystems (30) koordiniert, um Kollisionen zwischen dem Multiwell-Platten-Transfersystem (26) und dem Bildgebungssystem (30) zu vermeiden.

2. Analysator (20) nach Anspruch 1, wobei das Bildgebungssystem (30) dazu ausgebildet ist, Bilder aufzuzeichnen, die kolorimetrische oder fluoreszente Signale umfassen, die von den beleuchteten Proben in den Multiwell-Platten (110) innerhalb des Inkubationsfeldes (102) stammen.

3. Analysator (20) nach einem der vorhergehenden Ansprüche, wobei der Analysator (20) so konfiguriert ist, dass er während des Betriebs Multiwell-Platten mit frischen Proben aufnehmen kann, um kontinuierliche Analysevorgänge zu ermöglichen.

4. Analysator (20) nach einem der vorhergehenden Ansprüche, wobei der Analysator (20) als Warteschlangensystem betreibbar ist, um die Auslastung der Ressourcen innerhalb des Analysators für die Verarbeitung der Multiwell-Platten (110) mit Proben innerhalb des Analysators (20) zu maximieren.

5. Analysator (20) nach einem der vorhergehenden Ansprüche, wobei die Steuerung (108) so ausgelegt ist, dass sie gemäss einer Vorhersagemethode zur Koordinierung der Bewegung mehrerer Roboterelemente arbeitet, um Kollisionen zwischen den Roboterelementen zu vermeiden, wobei das Vorhersagemethoden vorzugsweise die Bewegung mehrerer Roboterelemente koordiniert, die in einer gemeinsamen Zeit- und Raumumgebung arbeiten ("Koordinierungsfunktion"), um Kollisionen zwischen Subsystemen zu vermeiden und gleichzeitig den Systemdurchsatz zu maximieren und die Gesamtverzögerung bei der Verarbeitung von Multiwell-Platten durch das System zu minimieren.

6. Analysator (20) nach einem der vorhergehenden Ansprüche, wobei das Mehrwell-Platten-Transfersystem (26) ein Mikroplatten-Kransystem ist.

7. Analysator (20) nach einem der vorhergehenden Ansprüche, wobei die Ressourcensteuerung (108) so ausgelegt ist, dass sie die Bildinformationen unter Verwendung eines Bildprozessors verarbeitet, um eine positive Bestimmung der zu testenden biologischen oder biochemischen Substanz zu ermitteln.

8. Analysator (20) nach einem der vorhergehenden Ansprüche, wobei die Steuerung (108) so ausgelegt ist, dass sie das Bildgebungssystem so steuert, dass es die Mehrzahl von Multiwell-Platten (110), die im Inkubationsfeld (102) gehalten werden, gemäss einer vorbestimmten Inkubationszeit und Scanfrequenz optisch scannt.

9. Analysator (20) nach einem der vorhergehenden Ansprüche, wobei das Inkubationsfeld (102) so ausgelegt ist, dass es eine gleichmässige Hintergrundbeleuchtung bereitstellt.

10. Analysator (20) nach einem der vorhergehenden Ansprüche, wobei der Analysator (20) eine Mehrzahl von Lichtleitfaserbündeln umfasst, wobei jedes Lichtleitfaserbündel einem jeweiligen Mikroplattensteckplatz des Inkubationsfeldes (102) zugeordnet ist.

11. Analysator (20) nach einem der vorhergehenden Ansprüche, wobei das Bildgebungssystem (30) ein Abtastbildgebungssystem ist, das mindestens eine optische Kamera umfasst, die zum Abbilden der Mehrzahl von Multiwell-Platten im Inkubationsfeld (102) ausgelegt ist.

12. Analysator (20) nach einem der vorhergehenden Ansprüche, wobei das Bildgebungssystem (30) dazu ausgelegt ist, das Inkubationsfeld (102) in einem zweidimensionalen Scanpfad abzutasten.

13. Analysator (20) nach einem der vorhergehenden Ansprüche, wobei das Bildgebungssystem (30) mehrere Bildgebungskameras umfasst, die so ausgelegt sind, dass sie ein kombiniertes Sichtfeld über die gesamte Breite des Inkubationsfeldes (102) bereitstellen, und wobei das Bildgebungssystem (30) so ausgelegt ist, dass es das Inkubationsfeld (102) in einem eindimensionalen Scanpfad abtastet.

## Revendications

1. Analyseur automatisé (20, 100) pour des tests à haut débit visant à détecter la présence d'une substance biologique ou biochimique, l'analyseur (20, 100) comprenant :
une pluralité de stations de traitement d'échantillons adaptées pour recevoir des récipients d'échantillons et, éventuellement, inactiver les échantillons par chauffage, les transférer vers des plaques à puits multiples (110) et effectuer une ou plusieurs étapes de traitement ou d'analyse sur les échantillons conservés dans les plaques à puits multiples (110) ;
lesdites stations de traitement comprenant au moins une station d'incubation (28) qui comporte un champ d'incubation (102) adapté pour :
recevoir une pluralité de plaques à puits multiples (110) ;
fournir un éclairage (503) à la pluralité de plaques à puits multiples dans le champ d'incubation ; et
maintenir la pluralité de plaques à puits multiples à une température d'incubation prédéterminée ou à une plage de températures prédéterminée ;
dans lequel l'analyseur (20, 100) comprend en outre :
un système de transfert de plaques à puits multiples (26) adapté pour transférer la pluralité de plaques à puits multiples (110) entre chacune des stations de traitement ;
un système d'imagerie (30) adapté pour former une image des échantillons éclairés dans la pluralité de plaques à puits multiples (110) retenues dans le champ d'incubation (102) ; et
un contrôleur de ressources (108) adapté pour :
commander le système de transfert de plaques à puits multiples (26) afin de transférer séparément chaque plaque à puits multiples (110) de la pluralité de plaques à puits multiples vers des stations de traitement respectives pour la préparation et l'analyse de la substance biologique ou biochimique conformément à un programme de traitement prédéterminé ;
commander le système d'imagerie (30) pour balayer optiquement la pluralité de plaques à puits multiples retenues dans le champ d'incubation (102) selon une période d'incubation et une fréquence de balayage prédéterminées ;
recevoir des informations d'image optique provenant du système d'imagerie (30) de la pluralité de plaques à puits multiples balayées ; et
ordonner à un processeur d'image de traiter les informations d'image ;
dans lequel l'incubation des échantillons est effectuée simultanément avec l'imagerie optique et l'analyse des échantillons pour détecter la présence de la substance biologique ou biochimique,
dans lequel un temps d'occupation d'une plaque à puits multiples donnée dans le champ d'incubation (102) est indépendant des autres tests sur plaques à puits multiples, de manière à permettre l'incubation simultanée de plusieurs plaques à puits multiples (110) en parallèle et à prendre en charge une pluralité de temps d'incubation non uniformes dans le champ d'incubation (102) lors de l'exécution de plusieurs lots de réactions, et
dans lequel le système d'imagerie (30) est un système d'imagerie à balayage comprenant des composants qui se déplacent pendant le balayage, **caractérisé en ce que** le contrôleur (108) est adapté pour coordonner le mouvement du système de transfert de plaques à puits multiples (26) lors du transfert de plaques à puits multiples vers et depuis le champ d'incubation (102) avec le mouvement du système d'imagerie à balayage (30) afin d'éviter les collisions entre le système de transfert de plaques à puits multiples (26) et le système d'imagerie (30).

2. Analyseur (20) selon la revendication 1, dans lequel le système d'imagerie (30) est adapté pour enregistrer des images comprenant des signaux colorimétriques ou fluorescents provenant des échantillons éclairés dans les plaques à puits multiples (110) situées dans le champ d'incubation (102).

3. Analyseur (20) de l'une quelconque des revendications précédentes, dans lequel l'analyseur (20) est configuré pour accepter des plaques à puits multiples contenant des échantillons frais pendant son fonctionnement afin de permettre des opérations d'analyse continues.

4. Analyseur (20) de l'une quelconque des revendications précédentes, dans lequel l'analyseur (20) peut fonctionner comme un système de mise en file d'attente afin de maximiser l'utilisation des ressources à l'intérieur de l'analyseur pour traiter les plaques à puits multiples (110) contenant des échantillons à l'intérieur de l'analyseur (20).

5. Analyseur (20) de l'une quelconque des revendications précédentes, dans lequel le contrôleur (108) est agencé pour fonctionner selon un procédé prédictif de coordination du mouvement de plusieurs entités robotiques afin d'éviter les collisions entre les entités robotiques, de préférence le procédé prédictif coordonne le mouvement de plusieurs entités robotiques fonctionnant dans un environnement temporel et spatial partagé («fonction de coordination »), ) afin d'éviter les collisions entre les sous-systèmes, tout en maximisant le débit du système et en minimisant le retard global de traitement des plaques à puits multiples à travers le système.

6. Analyseur (20) de l'une quelconque des revendications précédentes, dans lequel le système de transfert de plaques à puits multiples (26) est un système de grue pour microplaques.

7. Analyseur (20) de l'une quelconque des revendications précédentes, dans lequel le contrôleur de ressources (108) est adapté pour traiter les informations d'image à l'aide d'un processeur d'image afin de déterminer une détermination positive de la substance biologique ou biochimique testée.

8. Analyseur (20) de l'une quelconque des revendications précédentes,
dans lequel le contrôleur (108) est agencé pour commander le système d'imagerie afin de balayer optiquement la pluralité de plaques à puits multiples (110) retenues dans le champ d'incubation (102) selon une période d'incubation et une fréquence de balayage prédéterminées.

9. Analyseur (20) selon l'une quelconque des revendications précédentes, dans lequel le champ d'incubation (102) est adapté pour fournir un éclairage arrière uniforme.

10. Analyseur (20) de l'une quelconque des revendications précédentes, dans lequel l'analyseur (20) comprend une pluralité de faisceaux de fibres optiques, chaque faisceau de fibres optiques étant associé à une fente de microplaque respective du champ d'incubation (102).

11. Analyseur (20) de l'une quelconque des revendications précédentes, dans lequel le système d'imagerie (30) est un système d'imagerie à balayage comprenant au moins une caméra optique adaptée pour imager la pluralité de plaques à puits multiples situées dans le champ d'incubation (102).

12. Analyseur (20) de l'une quelconque des revendications précédentes, dans lequel le système d'imagerie (30) est adapté pour balayer le champ d'incubation (102) selon un trajet de balayage bidimensionnel.

13. Analyseur (20) selon l'une quelconque des revendications précédentes, dans lequel le système d'imagerie (30) comprend une pluralité de caméras d'imagerie adaptées pour fournir un champ de vision combiné sur toute la largeur du champ d'incubation (102), et dans lequel le système d'imagerie (30) est adapté pour balayer le champ d'incubation (102) selon un trajet de balayage unidimensionnel.
